(19) Europäisches Patentamt
European Patent Office
Office européen des brevets

(11) **EP 4 579 389 A1**

(12) **EUROPEAN PATENT APPLICATION**
published in accordance with Art. 153(4) EPC

(43) Date of publication:
**02.07.2025 Bulletin 2025/27**

(21) Application number: **24795080.1**

(22) Date of filing: **30.10.2024**

(51) International Patent Classification (IPC):
**G06F 1/16** (2006.01)     **B06B 1/04** (2006.01)
**G06F 3/01** (2006.01)

(52) Cooperative Patent Classification (CPC):
**B06B 1/04; G06F 1/16; G06F 3/01**

(86) International application number:
**PCT/KR2024/096434**

(87) International publication number:
**WO 2025/095756 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.11.2023   KR 20230150583**
**21.11.2023   KR 20230161688**
**08.03.2024   KR 20240033443**

(71) Applicant: **Samsung Electronics Co., Ltd**
**Suwon-si, Gyeonggi-do 16677 (KR)**

(72) Inventors:
• **KIM, Younghun**
**Suwon-si, Gyeonggi-do 16677 (KR)**
• **KIM, Minsoo**
**Suwon-si, Gyeonggi-do 16677 (KR)**
• **KIM, Yongwoon**
**Suwon-si, Gyeonggi-do 16677 (KR)**
• **KIM, Taejeong**
**Suwon-si, Gyeonggi-do 16677 (KR)**
• **BAE, Jaehyun**
**Suwon-si, Gyeonggi-do 16677 (KR)**
• **LEE, Soogyu**
**Suwon-si, Gyeonggi-do 16677 (KR)**
• **HAN, Yonggil**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE INCLUDING ACTUATOR**

(57)     The disclosure relates to an electronic device. The electronic device according to an embodiment of the disclosure may include: a first housing; a second housing rotatably disposed with respect to the first housing; a third housing rotatably disposed with respect to the first housing and spaced apart from the second housing; a first hinge connecting the first housing and the second housing; a second hinge connecting the first housing and the third housing; a first actuator disposed in the second housing and configured to generate a first vibration; a second actuator disposed in the third housing and configured to generate a second vibration; and a processor configured to determine a relative angle between the second housing and the third housing, based on a first angle between the first housing and the second housing, the first angle being obtained using a plurality of sensors, and a second angle between the first housing and the third housing, the second angle being obtained using the plurality of sensors, and individually adjust at least one of the first vibration or the second vibration through at least one of the first actuator or the second actuator, based on the relative angle.

FIG. 7A

## Description

[Technical Field]

Various embodiments disclosed in this document relate to an electronic device, for example, an electronic device including an actuator.

[Background Art]

Thanks to remarkable developments in information communication technology and semiconductor technology, the distribution and use of various electronic devices is rapidly increasing. In particular, recent electronic devices are being developed to perform communication while being carried.

The term "electronic device" may refer to a device which performs a specific function according to its equipped program, such as a home appliance, an electronic scheduler, a portable multimedia player, a mobile communication terminal, a tablet PC, a video/sound device, a desktop/laptop computer, and a navigation device for automobile. For example, these electronic devices may output stored information as sound or video. As electronic devices become highly integrated, and high-speed and high-volume wireless communication becomes commonplace, an electronic device, such as a mobile communication terminal, is recently being equipped with various functions. For example, in addition to a communication function, an entertainment function such as a game function, a multimedia function such as music/video playback, a communication and security function such as mobile banking, and a function such as schedule management or an electronic wallet are integrated into one electronic device. Such electronic devices are being miniaturized so that users can conveniently carry the devices.

The above information may be presented as related art for the purpose of assisting in understanding the disclosure. None of the above contents make an assertion or decision as to whether any of the above might be applicable as prior art with regard to the disclosure.

[Detailed Description of the Invention]

[Technical Problem]

Electronic device may function as a haptic device by providing sensory information to the user through vibration member. For example, the haptic function may be used to provide e.g., a notification to the user by means of effective vibrations that convey certain information perceptible by the user. However, the design of the vibration function for a foldable electronic device with multiple housings may be complicated. Thus, there is a need to improve the vibration effect of a foldable electronic device to enhance the haptic function.

[Technical Solution]

An electronic device according to an embodiment of the disclosure may include: a first housing; a second housing rotatably disposed with respect to the first housing; a third housing rotatably disposed with respect to the first housing and spaced apart from the second housing; a first hinge connecting the first housing and the second housing; a second hinge connecting the first housing and the third housing; a first actuator disposed in the second housing and configured to generate a first vibration; a second actuator disposed in the third housing and configured to generate a second vibration distinct from the first vibration; a sensor configured to sense a first angle of the second housing with respect to the first housing and a second angle of the third housing with respect to the first housing; and a processor configured to adjust the first vibration or the second vibration, based on sensing information of the sensor.

A control method of an electronic device according to an embodiment of the disclosure includes: a first operation of determining a first angle between a first housing and a second housing rotatably disposed with respect to the first housing; a second operation of determining a second angle between the first housing and a third housing rotatably disposed with respect to the first housing; and a third operation of adjusting one of a first vibration generated from a first actuator disposed in the second housing and a second vibration generated from a second actuator disposed in the third housing, based on the first angle and the second angle.

An electronic device according to an embodiment of the disclosure includes: a first housing; a second housing rotatably disposed with respect to the first housing; a third housing rotatably disposed with respect to the first housing and spaced apart from the second housing; a first hinge connecting the first housing and the second housing; a second hinge connecting the first housing and the third housing; a first actuator disposed in the second housing and configured to generate a first vibration; a second actuator disposed in the third housing and configured to generate a second vibration; a sensor configured to sense a first angle of the second housing with respect to the first housing and a second angle of the third housing with respect to the first housing; and a processor configured to adjust the first vibration or the second vibration, based on a relative angle determined by the first angle and the second angle.

An electronic device according to an embodiment of the disclosure may include: a first housing; a second housing rotatably disposed with respect to the first housing; a third housing rotatably disposed with respect to the first housing and spaced apart from the second housing; a first hinge connecting the first housing and the second housing; a second hinge connecting the first housing and the third housing; a first actuator disposed in the second housing and configured to generate a first vibration; a second actuator disposed in the third housing and configured to generate a second vibration; and a processor configured to determine a relative angle between the second housing and the third housing, based on a first angle between the first housing and the second housing, the first angle being obtained using a plurality of sensors, and a second angle between the first housing and the third housing, the second angle being obtained using the plurality of sensors, and individually adjust at least one of the first vibration or the second vibration through at least one of the first actuator or the second actuator, based on the relative angle.

An electronic device according to an embodiment of the disclosure includes: a foldable housing including a first housing and a second housing; a first actuator disposed in the first housing and configured to generate a first vibration; a second actuator disposed in the second housing and configured to generate a second vibration; and a processor configured to individually adjust at least one of the first vibration or the second vibration through at least one of the first actuator or the second actuator, based on a relative angle between the first housing and the second housing, provide a first signal to the first actuator, and provide a second signal to the second actuator, wherein while the relative angle is greater than 0 degrees and less than 90 degrees, a phase of the second signal is reverse to a phase of the first signal and while the relative angle is greater than 90 degrees and less than 180 degrees, the phase of the second signal corresponds to the phase of the first signal.

[Advantageous Effects]

The present invention may enhance the haptic function of a foldable electronic device by improving the effectiveness of its vibrations to convey sensory information to the user. Specifically, the vibrations may be amplified by the adjustment based on the relative angle as noted above, which can reduce the cancellation of out-of-phase vibrations on different housings. In this manner, the loss of vibration intensity may be minimized and thus sensory information becomes optimally perceptible by the user. The user experience in the haptic function of the foldable electronic device can be advantageously improved.

[Brief Description of Drawings]

The above and other aspects, features, and/or advantages of an embodiment of the disclosure will be more apparent from the following detailed description taken in conjunction with the accompanying drawings.

FIG. 1 is a block diagram illustrating an electronic device in a network environment according to various embodiments.

FIG. 2 is a perspective view of an electronic device in an unfolded state according to an embodiment of the disclosure.

FIG. 3 is a perspective view of an electronic device in an unfolded state according to an embodiment of the disclosure.

FIG. 4 is a perspective view of an electronic device in a folded state according to an embodiment of the disclosure.

FIG. 5 is a lateral view of an electronic device in a folded state according to an embodiment of the disclosure.

FIG. 6 is an exploded perspective view of a part of an electronic device according to an embodiment of the disclosure.

FIG. 7A is a view of an electronic device according to an embodiment of the disclosure.

FIG. 7B is a view of an electronic device according to an embodiment of the disclosure.

FIG. 8 is a block diagram of components of an electronic device according to an embodiment of the disclosure.

FIG. 9 is a control block diagram of an electronic device according to an embodiment of the disclosure.

FIG. 10A is a view of an electronic device according to an embodiment of the disclosure.

FIG. 10B is a view illustrating an operation of a sensor of an electronic device according to an embodiment of the disclosure.

FIG. 11 is a view of an electronic device according to an embodiment of the disclosure.

FIG. 12A is a view of an electronic device according to an embodiment of the disclosure.

FIG. 12B is a graph of a signal of an electronic device according to an embodiment of the disclosure.

FIG. 12C is a graph of a signal of an electronic device according to an embodiment of the disclosure.

FIG. 13A is a view of an electronic device according to an embodiment of the disclosure.

FIG. 13B is a graph of a signal of an electronic device according to an embodiment of the disclosure.

FIG. 13C is a graph of a signal of an electronic device according to an embodiment of the disclosure.

FIG. 13D is a graph of a signal of an electronic device according to an embodiment of the disclosure.

FIG. 13E is a graph of a signal of an electronic device according to an embodiment of the disclosure.

FIG. 14A is a view of an electronic device according to an embodiment of the disclosure.

FIG. 14B is a graph of a signal of an electronic device according to an embodiment of the disclosure.

FIG. 14C is a graph of a signal of an electronic device according to an embodiment of the disclosure.

FIG. 14D is a graph of a signal of an electronic device according to an embodiment of the disclosure.

FIG. 15A is a view of an electronic device according to an embodiment of the disclosure.

FIG. 15B is a graph of a signal of an electronic device according to an embodiment of the disclosure.

FIG. 15C is a graph of a signal of an electronic device according to an embodiment of the disclosure.

FIG. 15D is a graph of a signal of an electronic device according to an embodiment of the disclosure.

FIG. 16A is a view of an electronic device according to an embodiment of the disclosure.

FIG. 16B is a graph of a signal of an electronic device according to an embodiment of the disclosure.

FIG. 16C is a graph of a signal of an electronic device according to an embodiment of the disclosure.

FIG. 16D is a graph of a signal of an electronic device according to an embodiment of the disclosure.

FIG. 17A is a view of an electronic device according to an embodiment of the disclosure.

FIG. 17B is a graph of a signal of an electronic device according to an embodiment of the disclosure.

FIG. 17C is a graph of a signal of an electronic device according to an embodiment of the disclosure.

FIG. 17D is a graph of a signal of an electronic device according to an embodiment of the disclosure.

Throughout the accompanying drawings, like reference numerals may be assigned to like parts, configurations, and/or structures.

[Mode for Carrying out the Invention]

The following description made with reference to the accompanying drawings may be provided to help an understanding of various exemplary implementations of the disclosure including the claims and equivalents thereof. An exemplary embodiment set forth in the following description includes various particular details to help the understanding, but is considered one of various embodiments. Therefore, it will be apparent to those skilled in the art that various changes and modifications may be made to various implementations described herein without departing from the scope and technical idea of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

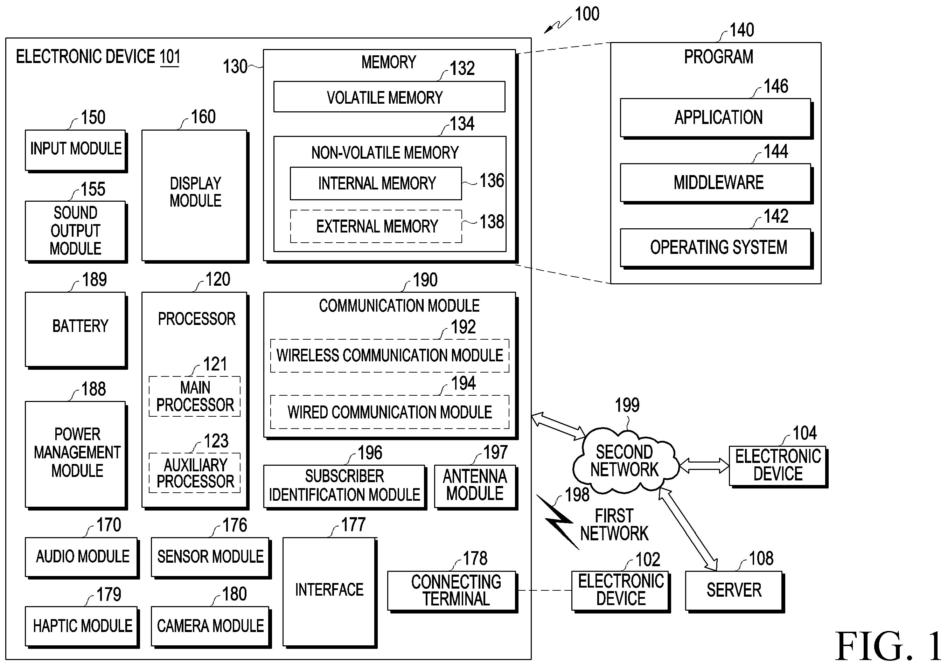

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"coupled to," "connected with,"* or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

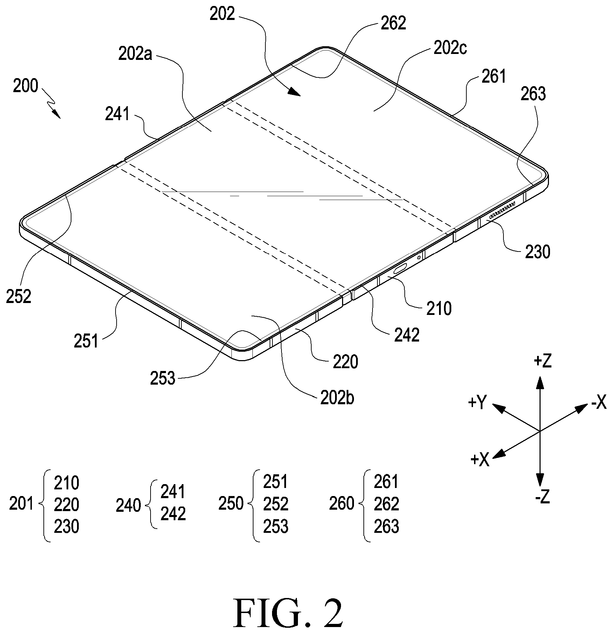

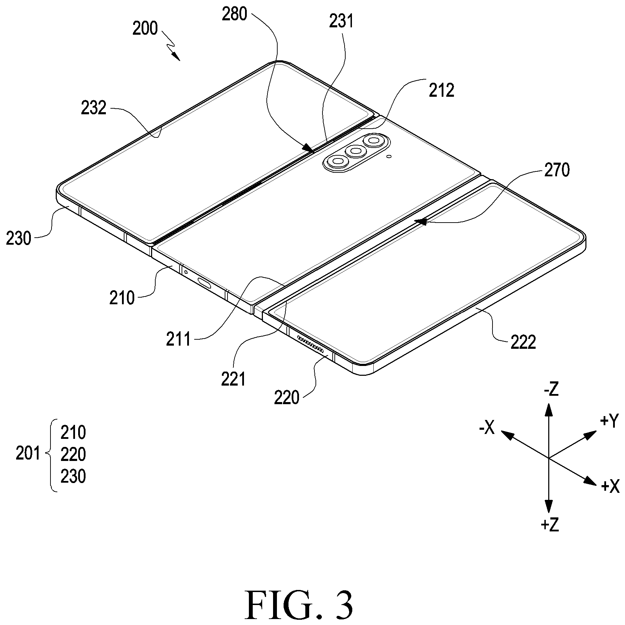

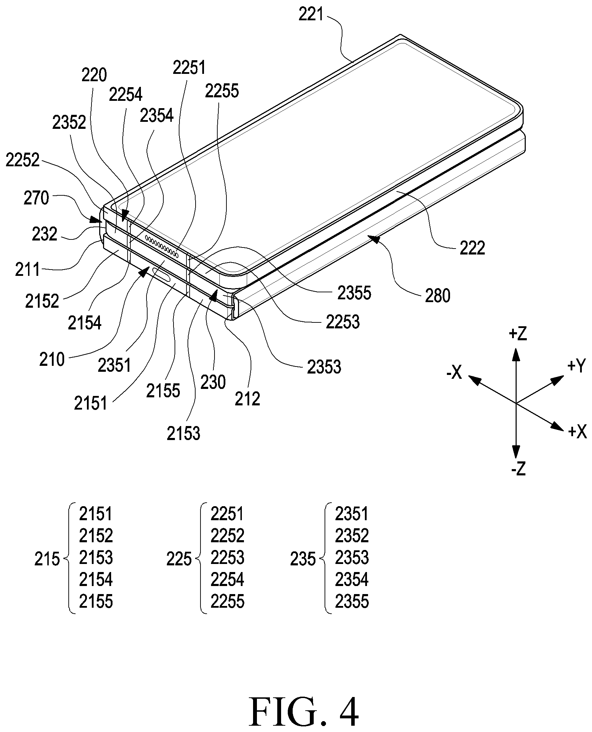

FIG. 2 is a perspective view of an electronic device 200 in an unfolded state according to an embodiment of the disclosure. FIG. 3 is a perspective view of the electronic device 200 in an unfolded state according to an embodiment of the disclosure. FIG. 2 may be a view of one lateral surface (e.g., a front surface) of the electronic device 200 as viewed obliquely, and FIG. 3 may be a view of another lateral surface (e.g., a rear surface) of the electronic device 200 as viewed obliquely. The components described with reference to FIGS. 2 and 3 may be partially or entirely the same as the components described with reference to FIG. 1. The components described with reference to FIGS. 2 and 3 may be partially or entirely the same as the components described with reference to FIGS. 4 to 17D. As shown in FIGS. 2 and 3, a state in which the electronic device 200 is unfolded may be defined as a "first state".

According to an embodiment, the electronic device 200 may include a housing 201. The electronic device 200 may include a display 202. The housing 201 may form a space in which the display 202 is disposed. The display 202 may be a flexible display 202. At least a part of the display 202 may be folded or unfolded.

According to an embodiment, the housing 201 may include a first housing 210. The housing 201 may include a second housing 220. The housing 201 may include a third housing 230. The first housing 210 may be disposed between the second housing 220 and the third housing 230. The second housing 220 may be rotatably coupled to the first housing 210. The third housing 230 may be rotatably coupled to the first housing 210. The display 202 may include a first display area 202a corresponding to the first housing 210, a second display area 202b corresponding to the second housing 220, and a third display area 202c corresponding to the third housing 230.

According to an embodiment, the electronic device 200 may include supports 240, 250, and 260. The supports 240, 250, and 260 may be disposed between the housing 201 and the display 202. The supports 240, 250, and 260 may be coupled to the housing 201 and may support the display 202. The supports 240, 250, and 260 may be arranged to surround the edge of the display 202. The supports 240, 250, and 260 may extend along the circumference of the housing 201. The supports 240, 250, and 260 may include a first support 240 disposed in the first housing 210, a second support 250 disposed in the second housing 220, and a third support 260 disposed in the third housing 230. Each of the supports 240, 250, and 260 may be referred to as a "body". Each of the supports 240, 250, and 260 may be referred to as a "frame". Each of the supports 240, 250, and 260 may be referred to as a "sealing member". Each of the supports 240, 250, and 260 may be referred to as a "peripheral part". Each of the supports 240, 250, and 260 may be referred to as a "circumferential part". Each of the supports 240, 250, and 260 may be referred to as a "peripheral structure". Each of the supports 240, 250, and 260 may be referred to as a "circumferential structure". The supports 240, 250, and 260 may be disposed between the housings 210, 220, and 230 and the display 202, respectively. The supports 240, 250, and 260 may reduce friction between the housings 210, 220, and 230 and the display 202. Each of the supports 240, 250, and 260 may be referred to as a "buffering member".

According to an embodiment, the supports 240, 250, and 260 may include the first support 240. The first support 240 may be disposed between the first housing 210 and the display 202. The first support 240 may be disposed along the edge of the first housing 210. The first support 240 may include a (1-1)th support 241 and a (1-2)th support 242. At least a part of the display 202 may be disposed between the (1-1)th support 241 and the (1-2)th support 242. The (1-1)th support 241 may be disposed in one end portion of the first housing 210, and the (1-2)th support body 242 may be disposed in the other end portion of the first housing 210. Each of the first, second, and third supports 240, 250, and 260 may be referred to as a "support". Each of the supports 240, 250, and 260 may be referred to as "deco", a "finishing member", or a "non-conductive member".

According to an embodiment, the supports 240, 250, and 260 may include the second support 250. The second support 250 may be disposed between the second housing 220 and the display 202. The second support 250 may be disposed along the edge of the second housing 220. The second support 250 may include a (2-1)th support 251, a (2-2)th support 252, and a (2-3)th support 253. At least a part of the display 202 may be disposed between the (2-2)th support 252 and the (2-3)th support 253. The (2-1)th support 251 may connect the (2-2)th support 252 and the (2-3)th support 253. The (2-1)th support 251 may extend along the edge (e.g., an edge 222 of FIG. 3) of the second housing 220. The (2-1)th support 251 may be disposed between the display 202 and the edge 222 of the second housing 220. The (2-1)th support 251 may be referred to as a "support frame" or a "first support frame". Each of the (2-2)th support 252 and the (2-3)th support 253 may be referred to as a "second support frame".

According to an embodiment, the supports 240, 250, and 260 may include the third support 260. The third support 260 may be disposed between the third housing 230 and the display 202. The third support 260 may be disposed along the edge of the third housing 230. The third support 260 may include a (3-1)th support 261, a (3-2)th support 262, and a (3-3)th support 263. At least a part of the display 202 may be disposed between the (3-2)th support 262 and the (3-3)th support 263. The (3-1)th support 261 may connect the (3-2)th support 262 and the (3-3)th support 263. The (3-1)th support 261 may extend along the edge (e.g., an edge 232 of FIG. 3) of the third housing 230. The (3-1)th support 261 may be disposed between the display 202 and the edge 232 of the third housing 230. The (3-1)th support 261 may be referred to as a "support frame" or a "first support frame". Each of the (3-2)th support 262 and the (3-3)th support 263 may be referred to as a "second support frame".

According to an embodiment, the first housing 210 may include a (1-1)th side portion 211 and a (1-2)th side portion 212. The (1-1)th side portion 211 and the (1-2)th side portion 212 may form opposite lateral surfaces of the first housing 210, respectively. The second housing 220 may be coupled with the (1-1)th side portion 211. The third housing 230 may be coupled with the (1-2)th side portion 212. The (1-1)th side portion 211 may be referred to as a "first coupling portion". The (1-2)th side portion 212 may be referred to as a "second coupling portion". The (1-1)th side portion 211 may be referred to as a "first portion". The (1-2)th side portion 212 may be referred to as a "second portion".

According to an embodiment, the second housing 220 may include a (2-1)th side portion 221 and a (2-2)th side portion 222. The (2-1)th side portion 221 and the (2-2)th side portion 222 may form opposite lateral surfaces of the second housing 220, respectively. The (2-1)th side portion 221 may be coupled with the first housing 210. The (2-2)th side portion 222 may form a lateral surface of the housing 201. The (2-2)th side portion 222 may be referred to as an "edge". The (2-1)th side portion 221 may be referred to as a "third side portion". The (2-2)th side portion 222 may be referred to as a "fourth side portion".

According to an embodiment, the third housing 230 may include a (3-1)th side portion 231 and a (3-2)th side portion 232. The (3-1)th side portion 231 and the (3-2)th side portion 232 may form opposite lateral surfaces of the third housing 230, respectively. The (3-1)th side portion 231 may be coupled with the first housing 210. The (3-2)th side portion 232 may form a lateral surface of the housing 201. The (3-2)th side portion 232 may be referred to as an "edge". The (3-1)th side portion 231 may be referred to as a "fifth side portion". The (3-2)th side portion 232 may be referred to as a "sixth side portion".

According to an embodiment, the electronic device 200 may include a first hinge 270 and a second hinge 280. The first hinge 270 may be disposed between the first housing 210 and the second housing 220. The first hinge 270 may be disposed between the (1-1)th side portion 211 and the (2-1)th side portion 221. The first hinge 270 may rotatably connect the first housing 210 and the second housing 220. The second hinge 280 may be disposed between the first housing 210 and the third housing 230. The second hinge 280 may be disposed between the (1-2)th side portion 212 and the (3-1)th side portion 231. The second hinge 280 may rotatably connect the first housing 210 and the third housing 230.

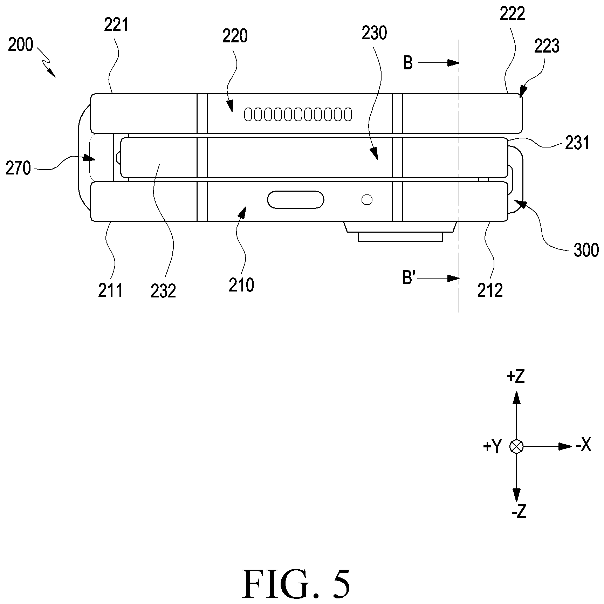

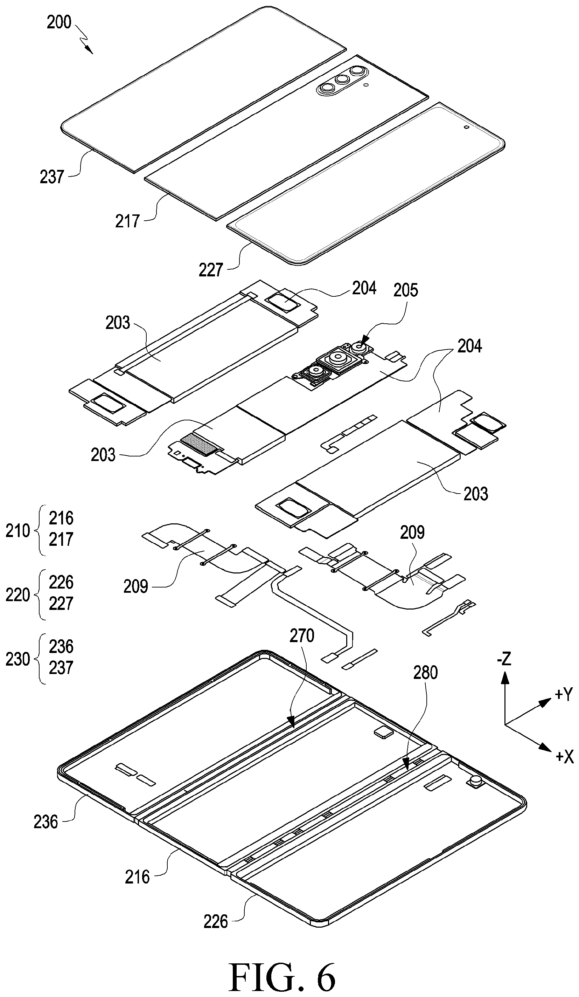

FIG. 4 is a perspective view of the electronic device 200 in a folded state according to an embodiment of the disclosure. FIG. 5 is a lateral view of the electronic device 200 of FIG. 4 viewed from one direction (e.g., -Y direction) toward another direction (e.g., +Y direction). The components described with reference to FIGS. 4 and 5 may be partially or entirely the same as the components described with reference to FIGS. 1 to 3. The components described with reference to FIGS. 4 and 5 may be partially or entirely the same as the components described with reference to FIGS. 6 to 17D.

According to an embodiment, the second housing 220 may be rotated with respect to the first housing 210. The first hinge 270 may provide a rotation center to the second housing 220. The first hinge 270 may connect the (1-1)th side portion 211 and the (2-1)th side portion 221. The third housing 230 may be rotated with respect to the first housing 210. The second hinge 280 may provide a rotation center to the third housing 230. The second hinge 280 may connect the (1-2)th side portion 212 and the (3-1)th side portion 231.

According to an embodiment, in a state in which the electronic device 200 is folded, each of the first, second, and third housings 210, 220, and 230 may be arranged in one direction (e.g., +Y direction). For example, the third housing 230 may be disposed above the first housing 210, and the second housing 220 may be disposed above the third housing 230. For example, the third housing 230 may be disposed between the first housing 210 and the second housing 220.

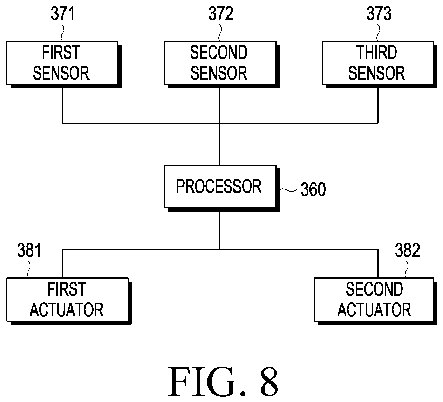

According to an embodiment, the electronic device 200 may include an antenna 223. The antenna 223 may be configured on the edge 222 of the second housing 220. The antenna 223 may be integrated with the second housing 220 and may be a part of the edge 222. The antenna 223 may be manufactured separately from the second housing 220 and may be coupled to the edge 222 of the second housing 220. The antenna 223 may be referred to as a "first conductive portion". The antenna 223 may include a metal material. According to an embodiment, the edge 222 of the second housing 220 may be an area of the second housing 220 where a screen of the flexible display 202 overlaps a portion which is not visible from the outside of a housing (e.g., the second housing 220) when the flexible display 202 is viewed from a screen display direction (e.g., +Z direction). For example, the edge 222 of the second housing 220 may include a bezel portion (e.g., a second support portion 257 of FIG. 8) of the second housing 220 and the antenna 223.

According to an embodiment, in a state in which the electronic device 200 is folded, the antenna 223 may be spaced apart from the second hinge 280. One surface of the antenna 223 may face the second hinge 280. The width of the first hinge 270 may be larger than the width of the second hinge 280. For example, with reference to FIG. 5A, the length that the first hinge 270 extends in the +Z direction may be greater than the length that the second hinge 280 extends in the +Z direction.

According to an embodiment, the antenna 223 may include a first antenna portion 2231, a second antenna portion 2232, and a third antenna portion 2233. The first, second, and third antenna portions 2231, 2232, and 2233 may be spaced apart from each other along the edge 222 of the second housing 220. Each of the first, second, and third antenna portions 2231, 2232, and 2233 may include a conductive material. The antenna 223 may include a first segment portion 2234 and a second segment portion 2235. The first segment portion 2234 may be disposed between the first antenna portion 2231 and the second antenna portion 2232. The second segment portion 2235 may be disposed between the first antenna portion 2231 and the third antenna portion 2233.

According to an embodiment, the electronic device 200 may include a first antenna 215, a second antenna 225, and a third antenna 235. The first antenna 215 may form a part of the first housing 210. The first antenna 215 may form at least a part of the surface of the first housing 210. The second antenna 225 may form a part of the second housing 220. The second antenna 225 may form at least a part of the surface of the second housing 220. The third antenna 235 may form a part of the third housing 230. The third antenna 235 may form at least a part of the surface of the third housing 230.

According to an embodiment, the first antenna 215 may include a (1-1)th antenna portion 2151, a (1-2)th antenna portion 2152, and a (1-3)th antenna portion 2153. The (1-1)th antenna portion 2151 may be disposed between the (1-2)th antenna portion 2152 and the (1-3)th antenna portion 2153. The first antenna 215 may include a (1-1)th segment portion 2154 and a (1-2)th segment portion 2155. The (1-1)th antenna portion 2151 and the (1-2)th antenna portion 2152 may be spaced apart from each other, and the (1-1)th segment portion 2154 may be disposed between the (1-1)th antenna portion 2151 and the (1-2)th antenna portion 2152. The (1-1)th antenna portion 2151 and the (1-3)th antenna portion 2153 may be spaced apart from each other, and the (1-2)th segment portion 2155 may be disposed between the (1-1)th antenna portion 2151 and the (1-3)th antenna portion 2153.

According to an embodiment, the second antenna 225 may include a (2-1)th antenna portion 2251, a (2-2)th antenna portion 2252, and a (2-3)th antenna portion 2253. The (2-1)th antenna portion 2251 may be disposed between the (2-2)th antenna portion 2252 and the (2-3)th antenna portion 2253. The second antenna 225 may include a (2-1)th segment portion 2254 and a (2-2)th segment portion 2255. The (2-1)th antenna portion 2251 and the (2-2)th antenna portion 2252 may be spaced apart from each other, and the (2-1)th segment portion 2254 may be disposed between the (2-1)th antenna portion 2251 and the (2-2)th antenna portion 2252. The (2-1)th antenna portion 2251 and the (2-3)th antenna portion 2253 may be spaced apart from each other, and the (2-2)th segment portion 2255 may be disposed between the (2-1)th antenna portion 2251 and the (2-3)th antenna portion 2253.

According to an embodiment, the third antenna 235 may include a (3-1)th antenna portion 2351, a (3-2)th antenna portion 2352, and a (3-3)th antenna portion 2353. The (3-1)th antenna portion 2351 may be disposed between the (3-2)th antenna portion 2352 and the (3-3)th antenna portion 2353. The third antenna 235 may include a (3-1)th segment portion 2354 and a (3-2)th segment portion 2355. The (3-1)th antenna portion 2351 and the (3-2)th antenna portion 2352 may be spaced apart from each other, and the (3-1)th segment portion 2354 may be disposed between the (3-1)th antenna portion 2351 and the (3-2)th antenna portion 2352. The (3-1)th antenna portion 2351 and the (3-3)th antenna portion 2353 may be spaced apart from each other, and the (3-2)th segment portion 2355 may be disposed between the (3-1)th antenna portion 2351 and the (3-3)th antenna portion 2353.

According to an embodiment, in a state in which the electronic device 200 is folded, the first housing 210, the second housing 220, and the third housing 230 may be aligned with each other. For example, in a state in which the electronic device 200 is folded, the first housing 210, the third housing 230, and the second housing 220 may be aligned in one direction (e.g., +Z direction) in the order described. In a state in which the electronic device 200 is folded, the first antenna 215, the second antenna 225, and the third antenna 235 may be aligned with each other. For example, in a state in which the electronic device 200 is folded, the first antenna 215, the third antenna 235, and the second antenna 225 may be aligned in one direction (e.g., +Z direction) in the order described. In a state in which the electronic device 200 is folded, the first antenna 215, the second antenna 225, and the third antenna 235 may be aligned with each other in a direction (e.g., +Z direction) in which the housings 210, 220, and 230 are stacked. For example, in a state in which the electronic device 200 is folded, the (1-1)th antenna portion 2151, the (2-1)th antenna portion 2251, and the (3-1)th antenna portion 2351 may be aligned in a first direction (e.g., +Z direction). For example, in a state in which the electronic device 200 is folded, the (1-2)th antenna portion 2152, the (2-2)th antenna portion 2252, and the (3-2)th antenna portion 2352 may be aligned in the first direction (e.g., +Z direction). For example, in a state in which the electronic device 200 is folded, the (1-3)th antenna portion 2153, the (2-3)th antenna portion 2253, and the (3-3)th antenna portion 2353 may be aligned in the first direction (e.g., +Z direction). For example, in a state in which the electronic device 200 is folded, the (1-1)th segment portion 2154, the (2-1)th segment portion 2254, and the (3-1)th segment portion 2354 may be aligned in the first direction (e.g., +Z direction). For example, in a state in which the electronic device 200 is folded, the (1-2)th segment portion 2155, the (2-2)th segment portion 2255, and the (3-2)th segment portion 2355 may be aligned in the first direction (e.g., +Z direction).

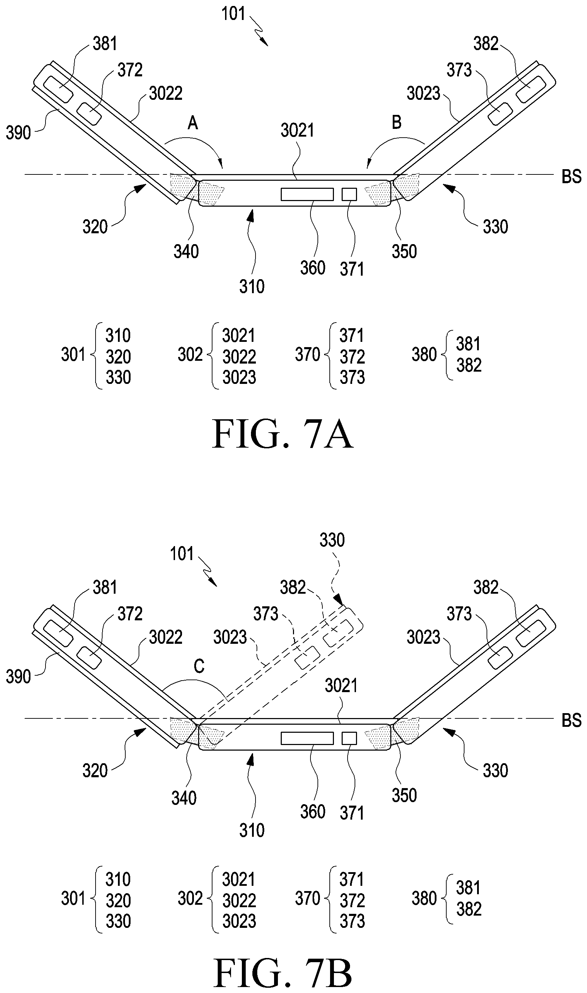

FIG. 6 is an exploded view of a part of the electronic device 200 according to an embodiment of the disclosure. FIG. 6 illustrates a state in which a display (e.g., the display 202 of FIG. 2) is not shown. The components described with reference to FIG. 6 may be partially or entirely the same as the components described with reference to FIGS. 1 to 5. The components described with reference to FIG. 6 may be partially or entirely the same as the components described with reference to FIGS. 7 to 17D.

According to an embodiment, the first housing 210 may include a first housing body 216. The first housing 210 may include a first cover 217. The first housing body 216 and the first cover 217 may be coupled with each other. At least a part of a display (e.g., the display 202 of FIG. 2) may be stably placed on the first housing body 216. At least a part of a second display (e.g., a second display 206 of FIG. 8) may be disposed between the first housing body 216 and the first cover 217.

According to an embodiment, the second housing 220 may include a second housing body 226. The second housing 220 may include a second cover 227. The second housing body 226 and the second cover 227 may be coupled with each other. At least a part of the display (e.g., the display 202 of FIG. 2) may be stably placed on the second housing body 226. At least a part of the second display (e.g., the second display 206 of FIG. 8) may be disposed between the second housing body 226 and the second cover 227. An antenna (e.g., the antenna 223 of FIG. 5) may be a part of the second housing body 226.

According to an embodiment, the third housing 230 may include a third housing body 236. The third housing 230 may include a third cover 237. The third housing body 236 and the third cover 237 may be coupled with each other. At least a part of the display (e.g., the display 202 of FIG. 2) may be stably placed on the third housing body 236. At least a part of the second display (e.g., the second display 206 of FIG. 8) may be disposed between the third housing body 236 and the third cover 237.

According to an embodiment, the first hinge 270 may rotatably connect the first housing body 216 and the second housing body 226. The second hinge 280 may rotatably connect the first housing body 216 and the third housing body 236.

According to an embodiment, the electronic device 200 may include a battery 203. The battery 203 may supply power to electrical components (e.g., the display 202, the second display 206, and a circuit board 204) of the electronic device 200. The battery 203 may be disposed between the housing bodies 216, 226, and 236 and the covers 217, 227, and 237. The electronic device 200 may include a circuit board 204. The circuit board 204 may be electrically connected to electrical components (e.g., the display 202, the second display 206, an antenna circuit 2236, and the battery 203) of the electronic device 200. The circuit board 204 may be disposed between the housing bodies 216, 226, and 236 and the covers 217, 227, and 237. The electronic device 200 may include a camera assembly 205. The camera assembly 205 may be disposed between the housing bodies 216, 226, and 236 and the covers 217, 227, and 237. The electronic device 200 may include a flexible circuit board 209. The flexible circuit board 209 may be connected to the circuit board 204.

According to an embodiment, the electronic device 200 may include a second conductive portion 233. The second conductive portion 233 may be a part of the third housing 230. The second conductive portion 233 may be disposed between the first housing 210 and the second housing 220 in a state in which the electronic device 200 is folded. The second conductive portion 233 may face the first hinge 270 in a state in which the electronic device 200 is folded.

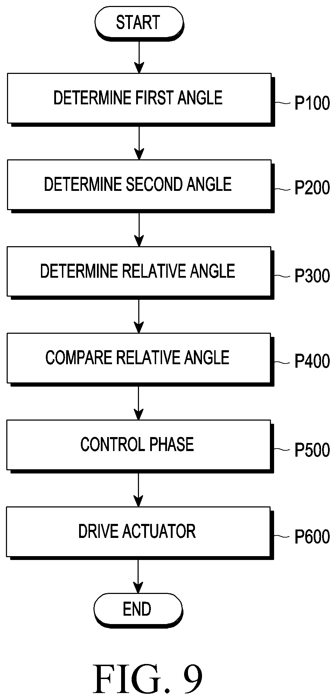

FIG. 7A is a view illustrating a state in which a part of a housing 301 of the electronic device 101 is folded. FIG. 7A may be a view illustrating the electronic device 101 viewed in a predetermined direction (e.g., the +Y direction in FIG. 4) in a state in which the housing 301 is folded. FIG. 7B is a view illustrating the movement of a third housing 330 among structures of FIG. 7A. FIG. 8 is a view conceptually illustrating the connection relationship between components 360, 371, 372, 373, 381, and 382 of the electronic device 101. The components described with reference to FIGS. 7A, 7B, and 8 may be partially or entirely the same as the components described with reference to FIGS. 1 to 6. The components described with reference to FIGS. 7A, 7B, and 8 may be partially or entirely the same as the components described with reference to FIGS. 9 to 17D.

According to an embodiment, the electronic device 101 may include a housing 301. The housing 301 may include a first housing 310, a second housing 320, and a third housing 330. The first housing 310 and the second housing 320 may be rotatably connected to each other. The first housing 310 and the third housing 330 may be rotatably connected to each other. The electronic device 101 may include a first hinge 340 which rotatably connects the first housing 310 and the second housing 320. The electronic device 101 may include a second hinge 350 which rotatably connects the first housing 310 and the third housing 330. The above description of the components (e.g., the housing 201, the first housing 210, the second housing 220, the third housing 230, the first hinge 270, and the second hinge 280) with reference to FIGS. 1 to 6 may be equally applicable to the description of the above-described components (e.g., the housing 301, the first housing 310, the second housing 320, the third housing 330, the first hinge 340, and the second hinge 350).

According to an embodiment, the electronic device 101 may include a display 302 stably placed on the housing 301. The display 302 may include a first display area 3021 corresponding to the first housing 310, a second display area 3022 corresponding to the second housing 320, and a third display area 3023 corresponding to the third housing 330. The first, second, and third display areas 3021, 3022, and 3023 may be integrally configured. The display 302 may be a flexible display, at least a part of which is folded or unfolded. The above description of the display 202 with reference to FIGS. 1 to 6 may be equally applicable to the description of the display 302.

According to an embodiment, the electronic device 101 may include a second display 390. The second display 390 may be disposed in the second housing 320. The second display 390 may move together with the second housing 320. The second display area 3022 may be disposed on a first surface of the second housing 320, and the second display 390 may be disposed on a second surface of the second housing 320, the second surface being opposite to the first surface.

According to an embodiment, the electronic device 101 may include a processor 360. The processor 360 may be disposed inside the housing 301. The processor 360 may be disposed inside the first housing 310. The above description of the processor 120 with reference to FIG. 1 may be equally applicable to the description of the processor 360.

According to an embodiment, the electronic device 101 may include a sensor 370. The sensor 370 may be a 6-axis sensor, an angle sensor, a position sensor, an acceleration sensor, a gyro sensor, or a proximity sensor. The sensor 370 may sense an angle at which the housing 301 is folded or unfolded. The sensor 370 may include a plurality of sensors 371, 372, and 373. Each of the plurality of sensors 371, 372, and 373 may be disposed in one of the first, second, and third housings 310, 320, and 330. The sensor 370 may include a first sensor 371, a second sensor 372, and a third sensor 373. Each of the first, second, and third sensors 371, 372, and 373 may be referred to as a "first sensor" or a "second sensor". The first sensor 371 may be disposed inside the first housing 310. The second sensor 372 may be disposed inside the second housing 320. The third sensor 373 may be disposed inside the third housing 330. The processor 360 may be electrically connected to the sensor 370. The processor 360 may receive a signal detected by the sensor 370. The processor 360 may be electrically connected to each of the first, second, and third sensors 371, 372, and 373. The processor 360 may receive signals generated from the first, second, and third sensors 371, 372, and 373. The processor 360 may determine a first angle between the first housing 310 and the second housing 320 or a second angle between the first housing 310 and the third housing 330, based on the signals generated from the first, second, and third sensors 371, 372, and 373.

According to an embodiment, the electronic device 101 may include an actuator 380. The actuator 380 may generate a vibration. The actuator 380 may transmit a vibration to the housing 301 and the display 302. The actuator 380 may provide a haptic function of the electronic device 101. The actuator 380 may be referred to as a "vibration member". The actuator 380 may be referred to as a "haptic device". An operation manner of the actuator 380 is not limited to the above description. For example, the actuator 380 may perform operations such as screen display, light emission, or sound in addition to vibration. The actuator 380 may include a plurality of actuators 380. Each of the plurality of actuators 380 may be disposed in one of the second housing 320 and the third housing 330. The actuator 380 may include a first actuator 381 disposed in the second housing 320 and a second actuator 382 disposed in the third housing 330. The first actuator 381 may transmit a vibration to the second housing 320 and the second display area 3022. The second actuator 382 may transmit a vibration to the third housing 330 and the third display area 3023. The processor 360 may be electrically connected to the actuator 380. The processor 360 may control the driving of the actuator 380. The processor 360 may be electrically connected to each of the first and second actuators 381 and 382. The processor 360 may determine a first angle between the first housing 310 and the second housing 320 or a second angle between the first housing 310 and the third housing 330, based on signals generated from the first, second, and third sensors 371, 372, and 373. The processor 360 may control the driving of the actuator 380, based on the first angle and the second angle.

According to an embodiment, the second housing 320 may be rotated with respect to the first housing 310. A first angle A may be formed between the first housing 310 and the second housing 320. The first angle A may be defined as an angle at which the second housing 320 is tilted with respect to the first housing 310. The first angle A may be defined as an angle at which the second display area 3022 is bent with respect to the first display area 3021. The first angle A may be defined as an angle formed between the first housing 310 and the second housing 320. The first display area 3021 may form a base surface (BS), and the first angle A may be defined as an angle at which the second housing 320 is inclined with respect to the base surface (BS).

According to an embodiment, the third housing 330 may be rotated with respect to the first housing 310. A second angle B may be formed between the first housing 310 and the third housing 330. The second angle B may be defined as an angle at which the third housing 330 is tilted with respect to the first housing 310. The second angle B may be defined as an angle at which the third display area 3023 is bent with respect to the first display area 3021. The second angle B may be defined as an angle formed between the first housing 310 and the third housing 330. The first display area 3021 may form a base surface (BS), and the second angle B may be defined as an angle at which the third housing 330 is inclined with respect to the base surface (BS).

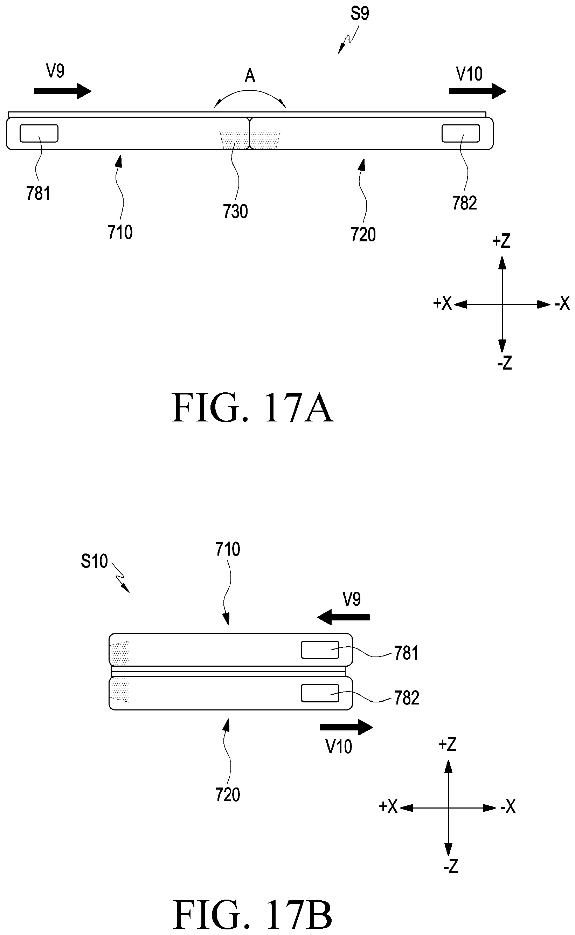

According to an embodiment, a relative angle C may be formed between the second housing 320 and the third housing 330. For example, as shown in FIG. 7B, the relative angle C may be an included angle between the second housing 320 and the third housing 330. As shown in FIGS. 17A and 17B, the electronic device 101 according to an embodiment of the disclosure may include two housings (e.g., a first housing 710 and a second housing 720 of FIG. 17A) and one hinge (e.g., a hinge 730 of FIG. 17A). For example, referring to FIG. 7B, the electronic device 101 may include the second housing 320, the third housing 330, and the hinge 340 which connects the second housing 320 and the third housing 330. In this case, the second housing 320 may be referred to as a "first housing", and the third housing 330 may be referred to as a "second housing". In this case, the processor 360 may be disposed in the first housing 320 or the second housing 330, and may receive signals from the plurality of sensors 372 and 373 to control the actuators 381 and 382.

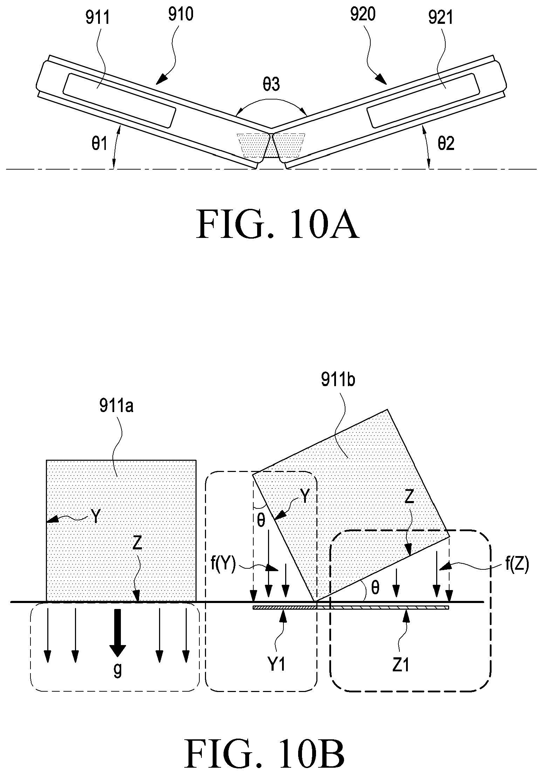

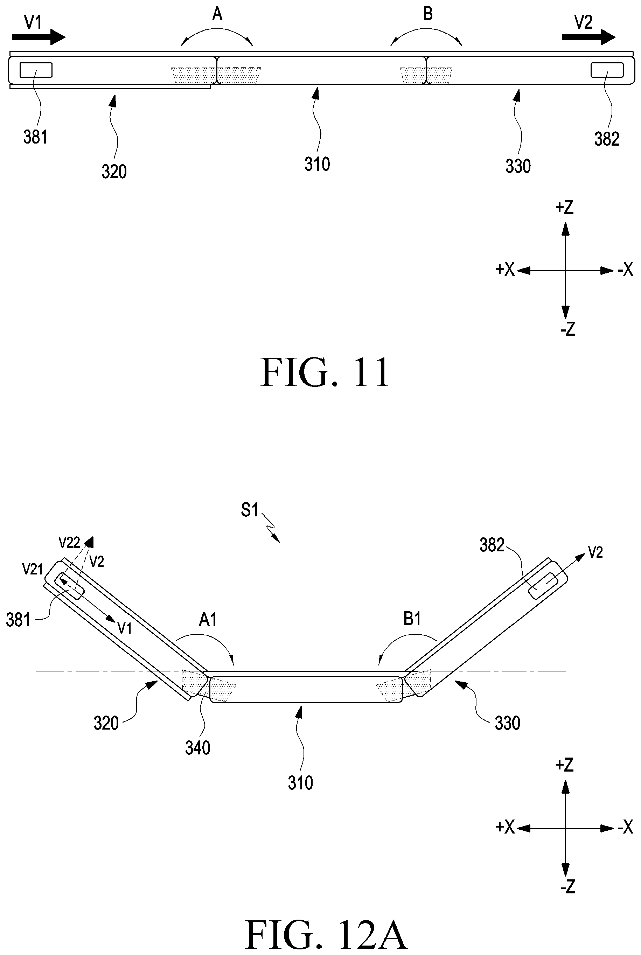

FIG. 9 is a block diagram illustrating a control method of the electronic device 101 according to an embodiment of the disclosure. FIG. 10A is a conceptual diagram illustrating a method of determining an angle (e.g., the first angle A) between housings (e.g., the first housing 310 and the second housing 320) according to an embodiment of the disclosure. FIG. 10B is a conceptual diagram illustrating a method of determining an angle (e.g., the first angle A) between housings (e.g., the first housing 310 and the second housing 320) according to an embodiment of the disclosure. The components described with reference to FIGS. 9 to 10B may be partially or entirely the same as the components described with reference to FIGS. 1 to 8. The components described with reference to FIGS. 9 to 10B may be partially or entirely the same as the components described with reference to FIGS. 11 to 17D.

According to an embodiment, a control method of the electronic device 101 may include an operation (P100) of determining a first angle A between the first housing 310 and the second housing 320. The processor 360 may determine a first angle A, based on information sensed by the first sensor 371 and the second sensor 372.

According to an embodiment, the control method of the electronic device 101 may include an operation (P200) of determining a second angle B between the first housing 310 and the third housing 330. The processor 360 may determine a second angle B, based on information sensed by the first sensor 371 and the third sensor 373.

According to an embodiment, the control method of the electronic device 101 may include an operation (P300) of determining a relative angle between the second housing 320 and the third housing 330. The processor 360 may determine a relative angle between the second housing 320 and the third housing 330, based on the first angle A and the second angle B.

According to an embodiment, the control method of the electronic device 101 may include an operation (P400) of comparing the relative angle between the second housing 320 and the third housing 330 with a preconfigured reference value. The processor 360 may compare the relative angle with the reference value.

According to an embodiment, the control method of the electronic device 101 may include an operation (P500) of controlling a phase of a signal input to the actuator 380. The processor 360 may control an operation of the actuator 380 and input a signal for operating the actuator 380. The processor 360 may control a phase of a signal input to the actuator 360.

According to an embodiment, the control method of the electronic device 101 may include an operation (P600) of driving the actuator 380. The processor 360 may drive the actuator 380. The processor 360 may transmit a signal for driving the actuator 380 to the actuator 380. The processor 360 may adjust a phase of the signal, and then transmit the phase-adjusted signal to the actuator 380.

According to an embodiment, the control method of the electronic device 101 may include operations (P100 and P200) of determining angles A and B formed by the housing 301. The processor 360 may determine angles A and B formed by the housing 301.

Referring to FIGS. 10A and 10B, a first housing 910 and a second housing 920 may be rotatably coupled with each other through a hinge 930. An angle $\theta3$ may be formed between the first housing 910 and the second housing 920. An included angle $\theta3$ between the first housing 910 and the second housing 920 may be determined by an angle $\theta1$ of the first housing 910 with respect to a base surface and an angle $\theta2$ of the second housing 920 with respect to the base surface. For example, the included angle $\theta3$ may be determined as a value obtained by subtracting the angle $\theta1$ of the first housing 910 and the angle $\theta2$ of the second housing 920 from 180 degrees, as described in Equation 1 below. The first housing 910 may include a first sensor 911, and the second housing 920 may include a second sensor 921. The first sensor 911 and the second sensor 21 may sense the angles $\theta1$ and $\theta2$.

【Equation 1】

$$\theta3 = 180-(\theta1+ \theta2)$$

According to an embodiment, the angles $\theta1$ and $\theta2$ of the housings 910 and 920 with respect to the base surface may be determined as shown in FIG. 10B. Referring to FIG. 10B, the first housing 910 may include a first sensor block 911a, and the second housing 920 may include a second sensor block 911b. The first sensor block 911a and the second sensor block 911b may be 6-axis sensors. The first sensor block 911a and the second sensor block 911b may be acceleration sensors. The first sensor block 911a may be disposed inside a first sensor (e.g., the first sensor 371 of FIG. 7). The second sensor block 911b may be disposed inside a second sensor (e.g., the second sensor 372 of FIG. 7). The angles $\theta1$ and $\theta2$ of the housings 910 and 920 with respect to the base surface may be determined by a manner of calculating an angle $\theta$ at which the sensor block 911b is tilted shown in FIG. 10B. The sensor block 911a may have a first area value Y in a first direction and a second area value Z in a second direction. Gravitational acceleration g may act on the sensor block 911a. In the sensor block 911b which is tilted, a gravitational acceleration distribution f(Y) in the first direction may be formed, and a gravitational acceleration distribution f(Z) in the second direction may be formed. A first gravitational acceleration area Y1 in the first direction may be calculated by integrating gyro data f(Y)Y which is obtained by multiplying the first area value Y in the first direction in the local unit by the gravitational acceleration distribution f(Y). A second gravitational acceleration area Z1 in the second direction may be calculated by integrating gyro data f(Z)Z which is obtained by multiplying the second area value Z in the second direction in the local unit by the gravitational acceleration distribution f(Z). In this case, the angle $\theta$ at which the sensor block 911b is tilted may be calculated by Equation 2 and Equation 3 below.

【Equation 2】

$$\tan\theta = \sin\theta / \cos\theta = (Y1/Y)/(Z1/Z) = Y1*Z/Y*Z1 = f(Y)YZ/f(Z)YZ = f(Y)/f(Z)$$

【Equation 3】

$$\theta=\tan^{-1}(f(Y)/f(Z))$$

Referring to FIGS. 7A to 10B, the processor 360 may determine a first angle A and a second angle B by using the manner described with reference to FIGS. 10A and 10B. The processor 360 may perform the operations (P100 and P200) of determining the first and second angles A and B, and may determine the first and second angles A and B through the method of calculating the included angle θ3 shown in FIG. 10A. The processor 360 may calculate a relative angle C between the second housing 320 and the third housing 330, based on the determined first and second angles A and B. The processor 360 may calculate the relative angle by using Equation 4 below. The relative angle C may be an absolute value of the sum ((A-90)+(B-90)) of a value (A-90) obtained by subtracting 90 degrees from the first angle A and a value (B-90) obtained by subtracting 90 degrees from the second angle B.

【Equation 4】

$$\text{Relative angle } (C) = |(A-90)+(B-90)|$$

Referring to FIGS. 7A to 10B, the processor 360 may compare the determined relative angle C with a preconfigured reference value. For example, the reference value may be 90 degrees. When the relative angle C is included within a first range, the processor 360 may change a phase of a signal transmitted to the actuator 380 from a first phase to a second phase. When the relative angle C is included within a second range, the processor 360 may maintain the phase of the signal transmitted to the actuator 380 at the first phase. The first range of the relative angle C may be within a range of 0 degrees to 90 degrees. The second range of the relative angle C may be within a range of 90 degrees to 180 degrees. The processor 360 may perform comparison with the relative angle C (P400) and then controls the phase of the signal transmitted to the actuator 380 (P500), and transmit the signal having the controlled phase to the actuator 380 to drive the actuator (P600).

FIG. 11 is a view illustrating the electronic device 101 viewed in a predetermined direction (e.g., the +Y direction in FIG. 4) in a state in which the electronic device 101 is unfolded. The components described with reference to FIG. 11 may be partially or entirely the same as the components described with reference to FIGS. 1 to 10B. The components described with reference to FIG. 11 may be partially or entirely the same as the components described with reference to FIGS. 12A to 17D.

According to an embodiment, a first angle A may be formed between the first housing 310 and the second housing 320. A second angle B may be formed between the first housing 310 and the third housing 330. The first actuator 381 may be disposed in the second housing 320. The second actuator 382 may be disposed in the third housing 330. The first actuator 381 may vibrate in a first direction (e.g., -X direction). The vibration of the first actuator 381 may be defined as a first vibration V1. The second actuator 382 may vibrate in the first direction (e.g., -X direction). The vibration of the second actuator 382 may be defined as a second vibration V2. The first vibration V1 and the second vibration V2 may be in the same direction or in different directions. The first vibration V1 and the second vibration V2 may be the same or different from each other depending on a state in which the housings 310, 320, and 330 are folded.

According to an embodiment, a vibration direction of the first vibration V1 and a vibration direction of the second vibration V2 may be formed along the surface of the display 302. For example, the first vibration V1 may be formed in the first direction (e.g., -X direction) along the surface of the display 302. For example, the second vibration V2 may be formed in the first direction (e.g., -X direction) along the surface of the display 302. Since vibration directions of the actuators 381 and 382 are formed as described above, the vibration generated from the actuators 381 and 382 may be evenly transmitted to the entire surface of the display 302. In particular, in the electronic device 101 according to an embodiment of the disclosure, as the housing 301 includes three housings 310, 320, and 330, the area of the display 302 is larger than the area thereof in a case where the housing 301 includes one or two housings. The actuators 381 and 382 of the electronic device 101 according to an embodiment of the disclosure generate vibrations along the surface of the display 302, thereby spreading the vibrations evenly across a large entire area of the display 302.

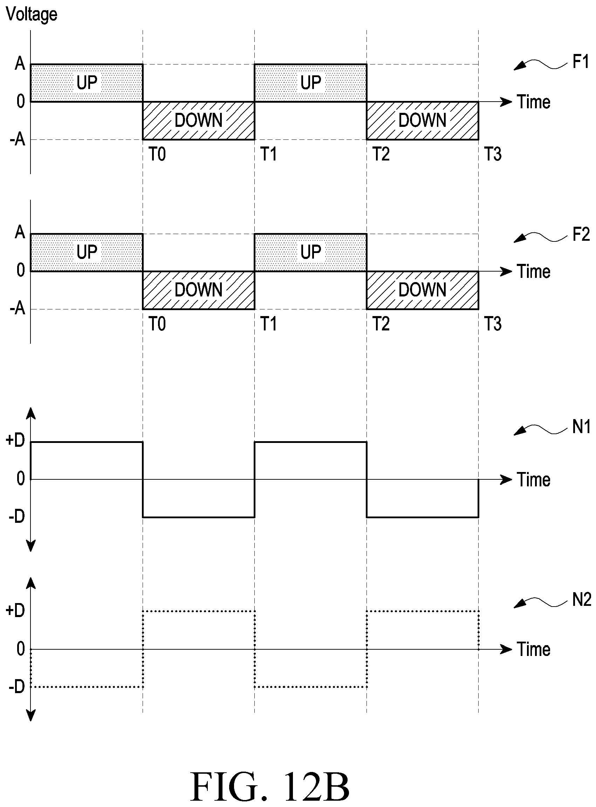

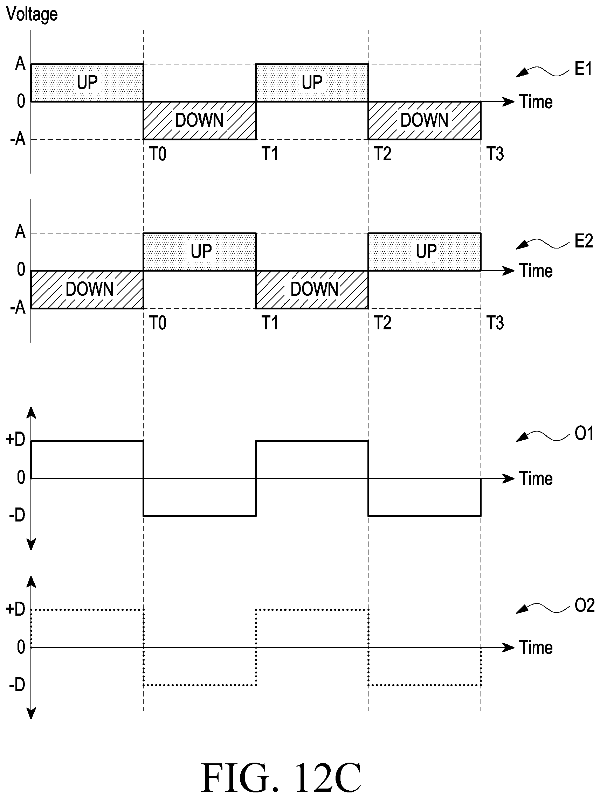

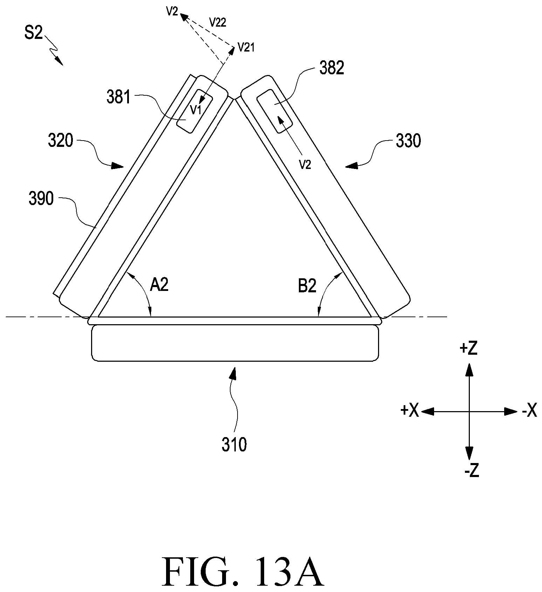

FIG. 12A is a view illustrating a first example S1 of a state in which the electronic device 101 is folded. FIG. 12B is a graph illustrating vibrations N1 and N2 of the actuator 380 and phases F1 and F2 of signals transmitted to the actuator 380 before phase control (e.g., the operation (P500) of FIG. 9) is performed by the processor 360. FIG. 12C is a graph illustrating vibrations O1 and O2 of the actuator 380 and phases E1 and E2 of signals transmitted to the actuator 380 after phase control (e.g., the operation (P500) of FIG. 9) is performed by the processor 360. The components described with reference to FIGS. 12A to 12C may be partially or entirely the same as the components described with reference to FIGS. 1 to 11. The components described with reference to FIGS. 12A to 12C may be partially or entirely the same as the components described with reference to FIGS. 13A to 17D.

According to an embodiment, the second housing 320 may be rotated with respect to the first housing 310. A first angle A1 may be formed between the first housing 310 and the second housing 320. The first actuator 381 may be disposed in the second housing 320. A first vibration V1 of the first actuator 381 may have a magnitude and a direction. In a first example S1 state of the electronic device 101, the first vibration V1 may have a direction inclined with respect to both a first direction (e.g., -X) and a second direction (e.g., +Z direction).

According to an embodiment, the third housing 330 may be rotated with respect to the first housing 310. A second angle B1 may be formed between the first housing 310 and the third housing 330. The second actuator 382 may be disposed in the third housing 330. A second vibration V2 of the second actuator 382 may have a magnitude and a direction. In the first example S1 state of the electronic device 101, the second vibration V2 may have a direction inclined with respect to both the first direction (e.g., -X) and the second direction (e.g., +Z direction).

According to an embodiment, the first vibration V1 may be a vector having a magnitude and a direction. The second vibration V2 may be a vector having a magnitude and a direction. The second vibration V2 may be inclined with respect to the first vibration V1. Referring to FIG. 12A, with respect to the first vibration V1, the second vibration V2 may be decomposed into two vectors. For example, the second vibration V2 may be decomposed into a (2-1)th vibration V21 in a direction parallel to the first vibration V1 and a (2-2)th vibration V22 in a direction orthogonal to the first vibration V1. Referring to FIG. 12A, the (2-1)th vibration V21 may have a direction opposite to the first vibration V1. Referring to FIG. 12A, when the first vibration V1 and the second vibration V2 are combined, with respect to the direction parallel to the first vibration V1, the magnitude of a vibration as much as the magnitude of the (2-1)th vibration V21 may be offset from the magnitude of the first vibration V1. In the state of the electronic device 101 as shown in FIG. 12A, phase change as shown in FIG. 12C may be performed.

In the first example S1 state of the electronic device 101, a relative angle C may be formed between the first vibration V1 and the second vibration V2. The relative angle may be an included angle between the first vibration V1 and the second vibration V2. The relative angle may be determined by the method described with reference to FIGS. 7 to 10B. In the first example S1 state of the electronic device 101, the relative angle C may be smaller than a preconfigured reference value (e.g., 90 degrees). The processor 360 may change one of a first phase of a first signal F1 transmitted to the first actuator 381 and a second phase of a second signal F2 transmitted to the second actuator 382. For example, the processor 360 may maintain the first phase of the first signal F1 transmitted to the first actuator 381, and change the second phase of the second signal F2 transmitted to the second actuator 382 from a first state F2 to a second state E2. The second phase of the second signal in the first state F2 and the second phase of the second signal in the second state E2 may be opposite to each other.

In the first example S1 state of the electronic device 101, the processor 360 may change one of the first vibration V1 of the first actuator 381 and the second vibration V2 of the second actuator 382 into an opposite phase. For example, the processor 360 may maintain the first vibration V1 of the first actuator 381 in both a first state N1 and a second state O1 equally, and may change the second vibration V2 of the second actuator 382 from a first state N2 to a second state O2. The above-described change of the processor 360 may be performed by changing the second phase of the second signal F2 from the first state F2 to the second state E2. After the processor 360 changes one of the first vibration V1 of the first actuator 381 and the second vibration V2 of the second actuator 382 into the opposite phase, an amplitude (e.g., +D) of the first vibration V1 of the first actuator 381 and an amplitude (e.g., +D) of the second vibration V2 of the second actuator 382 may be formed in the same direction in the same time interval. As the first actuator 381 and the second actuator 382 vibrate in the same direction, the vibration transmitted to the housing 301 may be amplified by constructive interference.

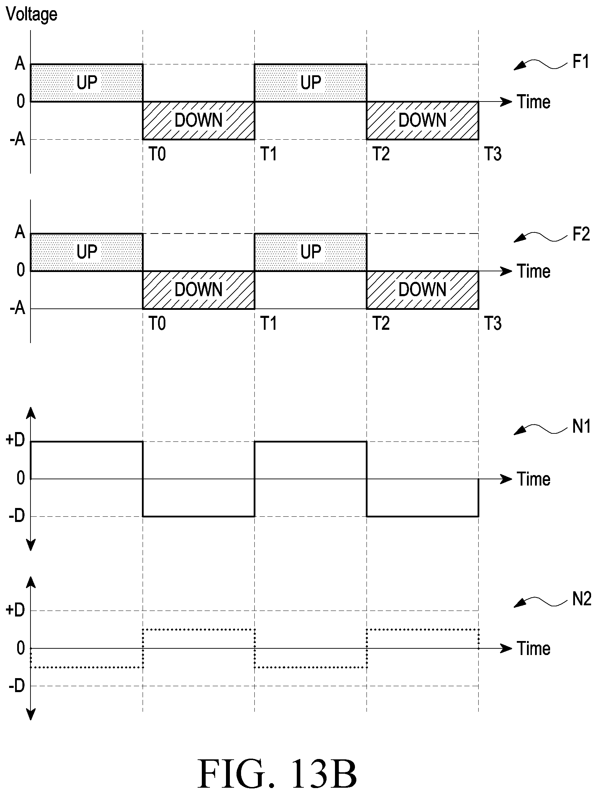

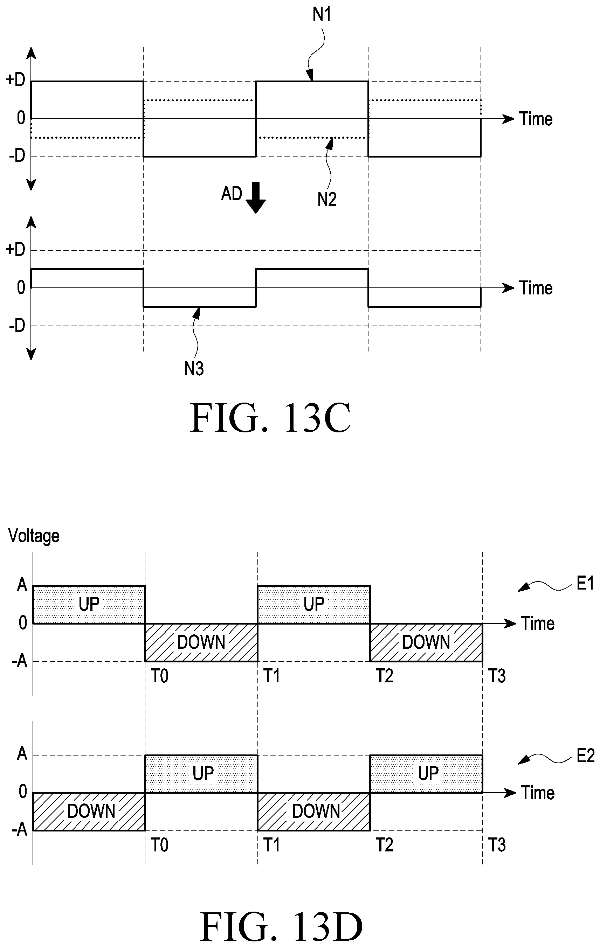

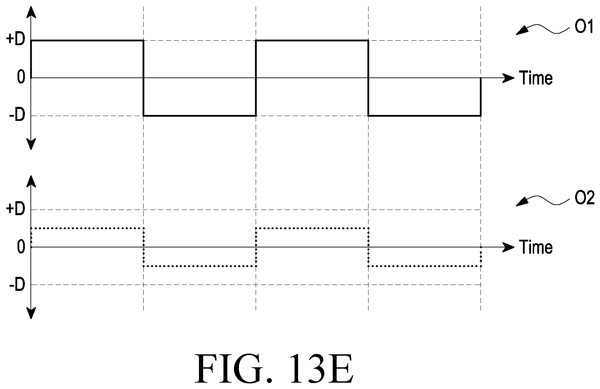

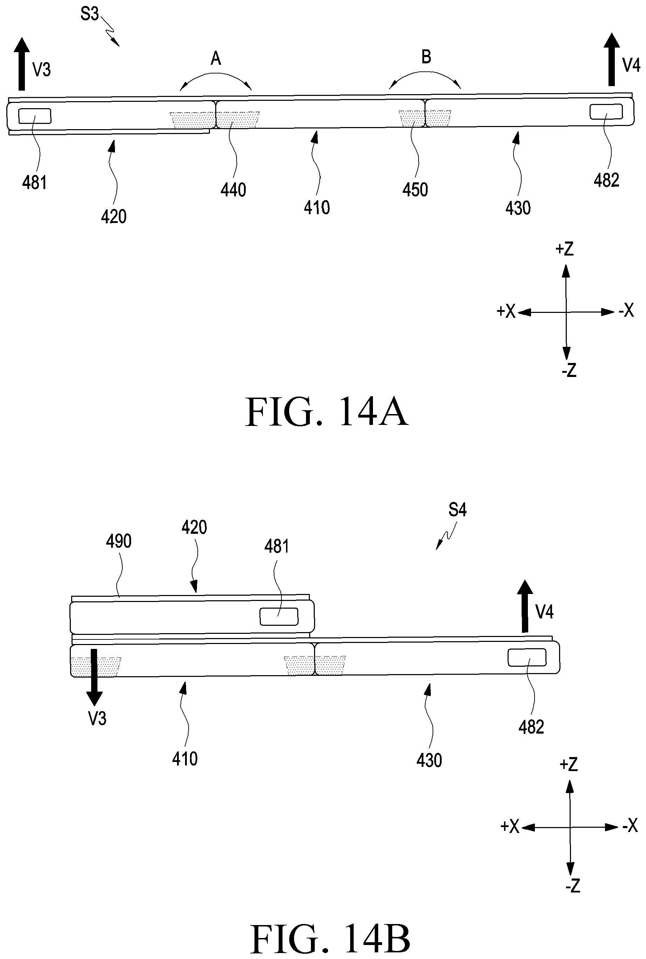

FIG. 13A is a view illustrating a second example S2 of a state in which the electronic device 101 is folded. FIG. 13B is a graph illustrating vibrations N1 and N2 of the actuator 380 and phases F1 and F2 of signals transmitted to the actuator 380 before phase control (e.g., the operation (P500) of FIG. 9) is performed by the processor 360. FIG. 13C is a graph illustrating a vibration generated by the actuator 380 before phase control (e.g., the operation (P500) of FIG. 9) is performed by the processor 360. FIG. 13D is a graph illustrating phases E1 and E2 of signals transmitted to the actuator 380 after phase control (e.g., the operation (P500) of FIG. 9) is performed by the processor 360. FIG. 13E is a graph illustrating vibrations O1 and O2 of the actuator 380 after phase control (e.g., the operation (P500) of FIG. 9) is performed by the processor 360. The components described with reference to FIGS. 13A to 13E may be partially or entirely the same as the components described with reference to FIGS. 1 to 12C. The components described with reference to FIGS. 13A to 13E may be partially or entirely the same as the components described with reference to FIGS. 14A to 17D.

According to an embodiment, the second housing 320 may be rotated with respect to the first housing 310. A first angle A2 may be formed between the first housing 310 and the second housing 320. The first actuator 381 may be disposed in the second housing 320. A first vibration V1 of the first actuator 381 may have a magnitude and a direction. In a second example S2 state of the electronic device 101, the first vibration V1 may have a direction inclined with respect to both a first direction (e.g., -X) and a second direction (e.g., +Z direction).

According to an embodiment, the third housing 330 may be rotated with respect to the first housing 310. A second angle B2 may be formed between the first housing 310 and the third housing 330. The second actuator 382 may be disposed in the third housing 330. A second vibration V2 of the second actuator 382 may have a magnitude and a direction. In the second example S2 state of the electronic device 101, the second vibration V2 may have a direction inclined with respect to both the first direction (e.g., -X) and the second direction (e.g., +Z direction).

In the second example S2 state of the electronic device 101, the second display 390 may be visually exposed to the outside of the electronic device 101. A user may recognize a screen output from the second display 390.

According to an embodiment, the first vibration V1 may be a vector having a magnitude and a direction. The second vibration V2 may be a vector having a magnitude and a direction. The second vibration V2 may be inclined with respect to the first vibration V1. Referring to FIG. 13A, with respect to the first vibration V1, the second vibration V2 may be decomposed into two vectors. For example, the second vibration V2 may be decomposed into a (2-1)th vibration V21 in a direction parallel to the first vibration V1 and a (2-2)th vibration V22 in a direction orthogonal to the first vibration V1. Referring to FIG. 13A, the (2-1)th vibration V21 may have a direction opposite to the first vibration V1. Referring to FIG. 13A, when the first vibration V1 and the second vibration V2 are combined, with respect to the direction parallel to the first vibration V1, the magnitude of a vibration as much as the magnitude of the (2-1)th vibration V21 may be offset from the magnitude of the first vibration V1. In the state of the electronic device 101 as shown in FIG. 13A, phase change as shown in FIG. 13D may be performed.

In the second example S2 state of the electronic device 101, a relative angle C may be formed between the first vibration V1 and the second vibration V2. The relative angle may be an included angle between the first vibration V1 and the second vibration V2. The relative angle may be determined by the method described with reference to FIGS. 7 to 10B. In the second example S2 state of the electronic device 101, the relative angle C may be smaller than a preconfigured reference value (e.g., 90 degrees). The processor 360 may change one of a first phase of a first signal F1 transmitted to the first actuator 381 and a second phase of a second signal F2 transmitted to the second actuator 382. For example, the processor 360 may maintain the first phase of the first signal F1 transmitted to the first actuator 381, and change the second phase of the second signal F2 transmitted to the second actuator 382 from a first state F2 to a second state E2. The second phase of the second signal in the first state F2 and the second phase of the second signal in the second state E2 may be opposite to each other.

In the second example S2 state of the electronic device 101, the processor 360 may change one of the first vibration V1 of the first actuator 381 and the second vibration V2 of the second actuator 382 into an opposite phase. For example, the processor 360 may maintain the first vibration V1 of the first actuator 381 in both a first state N1 and a second state O1 equally, and may change the second vibration V2 of the second actuator 382 from a first state N2 to a second state O2. The above-described change of the processor 360 may be performed by changing the second phase of the second signal F2 from the first state F2 to the second state E2. After the processor 360 changes one of the first vibration V1 of the first actuator 381 and the second vibration V2 of the second actuator 382 into the opposite phase, an amplitude (e.g., +D) of the first vibration V1 of the first actuator 381 and an amplitude (e.g., a value between 0 and +D) of the second vibration V2 of the second actuator 382 may be formed in the same direction in the same time interval. As the first actuator 381 and the second actuator 382 vibrate in the same direction, the vibration transmitted to the housing 301 may be amplified by constructive interference.

In the second example S2 state of the electronic device 101, the processor 360 may change one of the first vibration V1 of the first actuator 381 and the second vibration V2 of the second actuator 382 into an opposite phase. For example, the processor 360 may maintain the second vibration V2 of the second actuator 382 in both the first state N2 and the second state O2 equally, and may change the first vibration V1 of the first actuator 381 from the first state N1 to an opposite phase state. The above-described change of the processor 360 may be performed by changing the first phase of the first signal F1 from a first state F1 to an opposite phase state. After the processor 360 changes one of the first vibration V1 of the first actuator 381 and the second vibration V2 of the second actuator 382 into the opposite phase, the amplitude (e.g., +D) of the first vibration V1 of the first actuator 381 and the amplitude (e.g., a value between 0 and +D) of the second vibration V2 of the second actuator 382 may be formed in the same direction in the same time interval. As the first actuator 381 and the second actuator 382 vibrate in the same direction, the vibration transmitted to the housing 301 may be amplified by constructive interference.

In the second example S2 state of the electronic device 101, the processor 360 may stop driving one of the first actuator 381 and the second actuator 382. For example, the processor 360 may stop the first actuator 381 and drive only the second actuator 382. For example, the processor 360 may stop the second actuator 382 and drive only the first actuator 381. When the processor 360 drives only the first actuator 381, only the first vibration V1 may be transmitted to the housing 301. When the processor 360 drives only the second actuator 382, only the second vibration V2 may be transmitted to the housing 301.

In the second example S2 state of the electronic device 101, when phase change is not performed by the processor 360, an amplitude N1 (e.g., +D) of the first vibration V1 of the first actuator 381 and an amplitude N2 (e.g., a value between -D and 0) of the second vibration V2 of the second actuator 382 may be formed in opposite directions. As the first actuator 381 and the second actuator 382 vibrate in opposite directions, an amplitude N3 of the vibration transmitted to the housing 301 may be reduced due to destructive interference (AD).

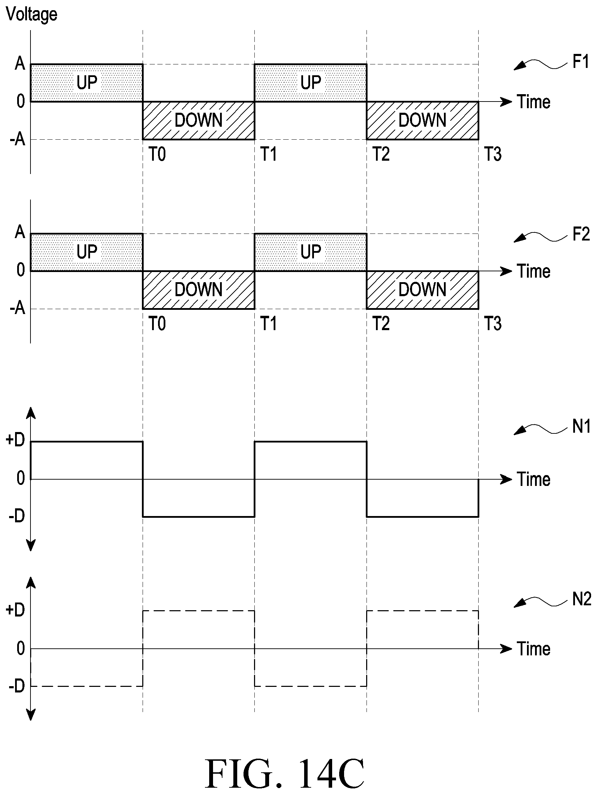

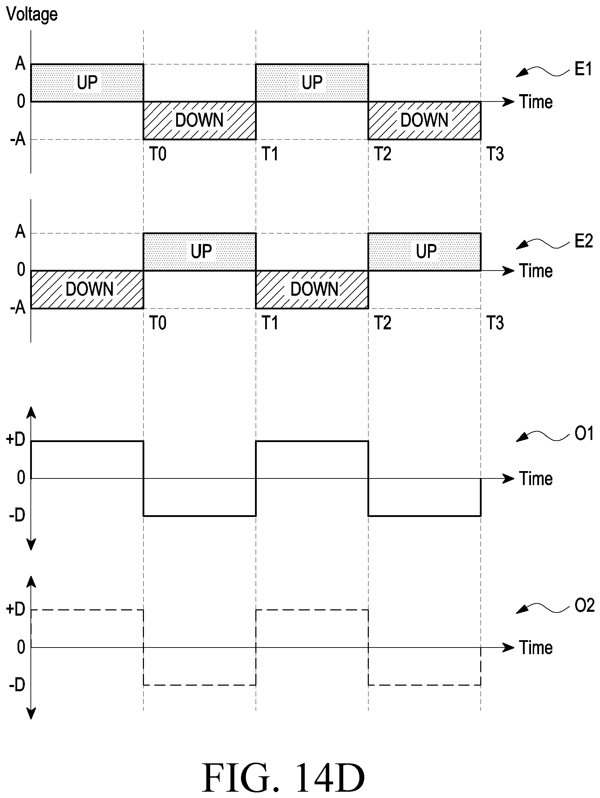

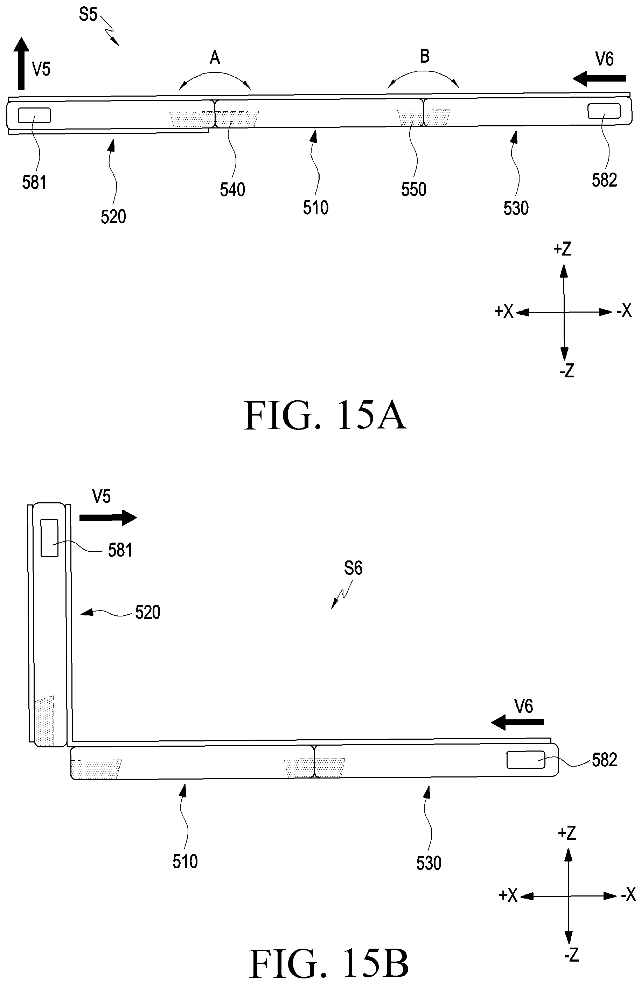

FIG. 14A is a view illustrating a third example S3 of a state in which the electronic device 101 is folded. FIG. 14B is a view illustrating a fourth example S4 of a state in which the electronic device 101 is folded. FIG. 14C is a graph illustrating vibrations N1 and N2 of an actuator 480 and phases F1 and F2 of signals transmitted to the actuator 480 before phase control (e.g., the operation (P500) of FIG. 9) is performed by the processor 360 in a fourth example S4 of a state in which the electronic device 101 is folded. FIG. 14D is a graph illustrating vibrations O1 and O2 of an actuator 480 and phases E1 and E2 of signals transmitted to the actuator 480 after phase control (e.g., the operation (P500) of FIG. 9) is performed by the processor 360 in a fourth example S4 of a state in which the electronic device 101 is folded. The components described with reference to FIGS. 14A to 14D may be partially or entirely the same as the components described with reference to FIGS. 1 to 13E. The components described with reference to FIGS. 14A to 14D may be partially or entirely the same as the components described with reference to FIGS. 15A to 17D.

According to an embodiment, a second housing 420 may be rotated with respect to a first housing 410. The first housing 410 and the second housing 420 may be connected through a first hinge 440. A first angle A may be formed between the first housing 410 and the second housing 420. A first actuator 481 may be disposed in the second housing 420. A first vibration V3 of the first actuator 481 may have a magnitude and a direction. For example, the first vibration V3 of the first actuator 481 may have a vibration component in a second direction (e.g., +Z direction).

According to an embodiment, a third housing 430 may be rotated with respect to the first housing 410. The first housing 410 and the third housing 430 may be connected through a second hinge 450. A second angle B may be formed between the first housing 410 and the third housing 430. A second actuator 482 may be disposed in the third housing 430. A second vibration V4 of the second actuator 482 may have a magnitude and a direction. For example, the second vibration V4 of the second actuator 482 may have a vibration component in a second direction (e.g., +Z direction).

In a fourth example S4 state of the electronic device 101, a relative angle C may be formed between the first vibration V3 and the second vibration V4. The relative angle may be an included angle between the first vibration V3 and the second vibration V4. The relative angle may be determined by the method described with reference to FIGS. 7 to 10B. In the fourth example S4 state of the electronic device 101, the relative angle C may be smaller than a preconfigured reference value (e.g., 90 degrees). The processor 360 may change one of a first phase of a first signal F1 transmitted to the first actuator 481 and a second phase of a second signal F2 transmitted to the second actuator 482. For example, the processor 360 may maintain the first phase of the first signal F1 transmitted to the first actuator 481, and change the second phase of the second signal F2 transmitted to the second actuator 482 from a first state F2 to a second state E2. The second phase of the second signal in the first state F2 and the second phase of the second signal in the second state E2 may be opposite to each other.

In the fourth example S4 state of the electronic device 101, the processor 360 may change one of the first vibration V3 of the first actuator 481 and the second vibration V4 of the second actuator 482 into an opposite phase. For example, the processor 360 may maintain the first vibration V3 of the first actuator 481 in both a first state N1 and a second state O1 equally, and may change the second vibration V4 of the second actuator 482 from a first state N2 to a second state O2. The above-described change of the processor 360 may be performed by changing the second phase of the second signal F2 from the first state F2 to the second state E2. After the processor 360 changes one of the first vibration V3 of the first actuator 481 and the second vibration V4 of the second actuator 482 into the opposite phase, an amplitude (e.g., +D) of the first vibration V3 of the first actuator 481 and an amplitude (e.g., +D) of the second vibration V4 of the second actuator 482 may be formed in the same direction in the same time interval. As the first actuator 481 and the second actuator 482 vibrate in the same direction, the vibration transmitted to the housings 410, 420, 430 and a second display 490 may be amplified by constructive interference.

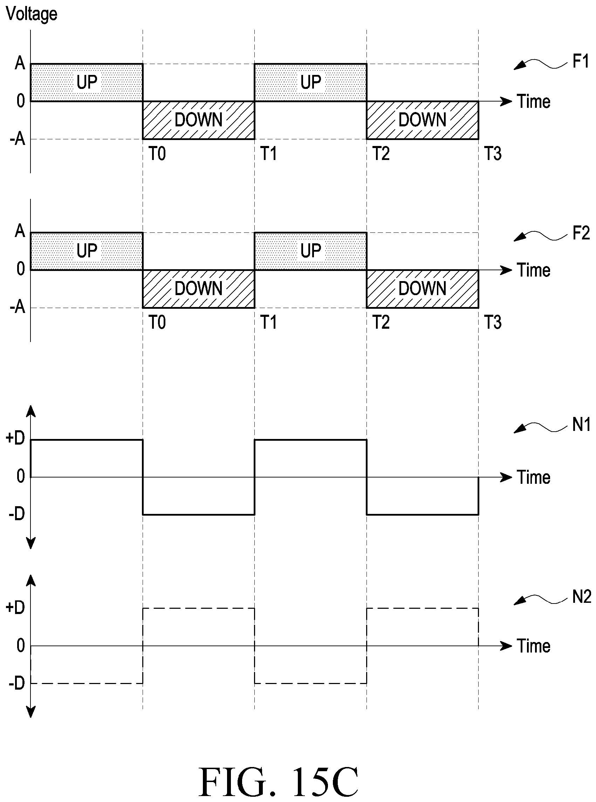

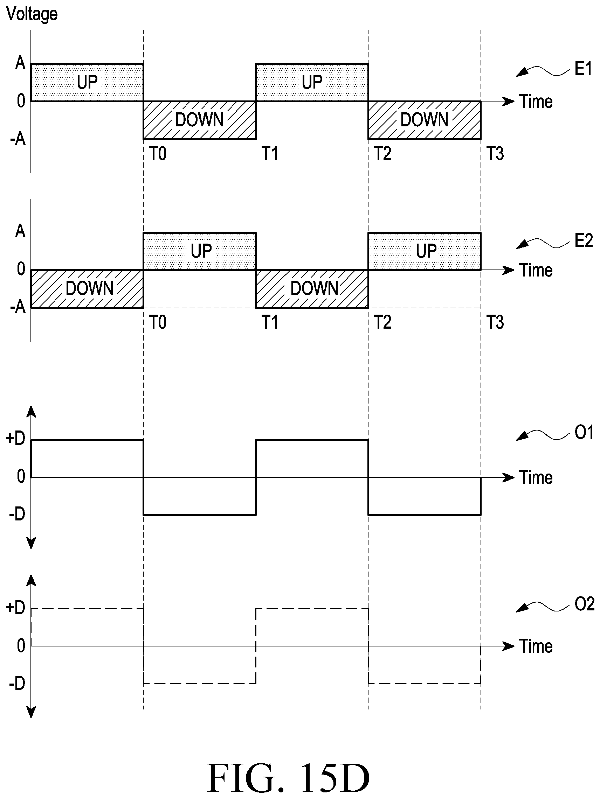

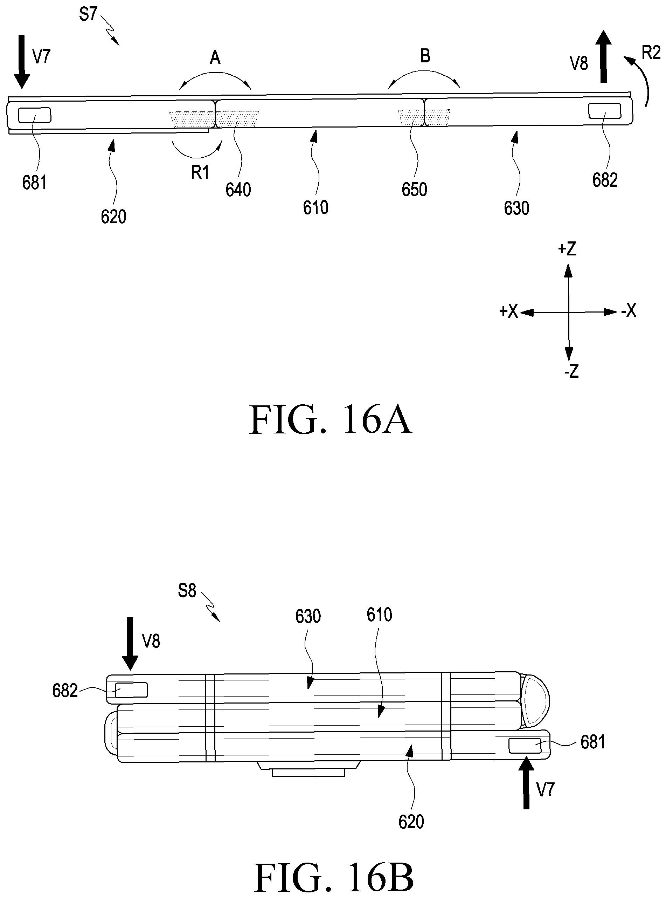

FIG. 15A is a view illustrating a fifth example S5 of a state in which the electronic device 101 is folded. FIG. 15B is a view illustrating a sixth example S6 of a state in which the electronic device 101 is folded. FIG. 15C is a graph illustrating vibrations N1 and N2 of an actuator 580 and phases F1 and F2 of signals transmitted to the actuator 580 before phase control (e.g., the operation (P500) of FIG. 9) is performed by the processor 360 in a sixth example S6 of a state in which the electronic device 101 is folded. FIG. 15D is a graph illustrating vibrations O1 and O2 of an actuator 580 and phases E1 and E2 of signals transmitted to the actuator 580 after phase control (e.g., the operation (P500) of FIG. 9) is performed by the processor 360 in a sixth example S6 of a state in which the electronic device 101 is folded. The components described with reference to FIGS. 15A to 15D may be partially or entirely the same as the components described with reference to FIGS. 1 to 14D. The components described with reference to FIGS. 15A to 15D may be partially or entirely the same as the components described with reference to FIGS. 16A to 17D.

According to an embodiment, a second housing 520 may be rotated with respect to a first housing 510. The first housing 510 and the second housing 520 may be connected through a first hinge 540. A first angle A may be formed between the first housing 510 and the second housing 520. A first actuator 581 may be disposed in the second housing 520. A first vibration V5 of the first actuator 581 may have a magnitude and a direction. For example, the first vibration V5 of the first actuator 581 may have a vibration component in a second direction (e.g., +Z direction).

According to an embodiment, a third housing 530 may be rotated with respect to the first housing 510. The first housing 510 and the third housing 530 may be connected through a second hinge 550. A second angle B may be formed between the first housing 510 and the third housing 530. A second actuator 582 may be disposed in the third housing 530. A second vibration V6 of the second actuator 582 may have a magnitude and a direction. For example, the second vibration V6 of the second actuator 582 may have a vibration component in a first direction (e.g., +X direction).

In a sixth example S6 state of the electronic device 101, a relative angle C may be formed between the first vibration V5 and the second vibration V6. The relative angle may be an included angle between the first vibration V5 and the second vibration V6. The relative angle may be determined by the method described with reference to FIGS. 7 to 10B. In the sixth example S6 state of the electronic device 101, the relative angle C may be smaller than a preconfigured reference value (e.g., 90 degrees). The processor 360 may change one of a first phase of a first signal F1 transmitted to the first actuator 581 and a second phase of a second signal F2 transmitted to the second actuator 582. For example, the processor 360 may maintain the first phase of the first signal F1 transmitted to the first actuator 581, and change the second phase of the second signal F2 transmitted to the second actuator 582 from a first state F2 to a second state E2. The second phase of the second signal in the first state F2 and the second phase of the second signal in the second state E2 may be opposite to each other.

In the sixth example S6 state of the electronic device 101, the processor 360 may change one of a first vibration V3 of the first actuator 581 and a second vibration V4 of the second actuator 582 into an opposite phase. For example, the processor 360 may maintain the first vibration V5 of the first actuator 581 in both a first state N1 and a second state O1 equally, and may change the second vibration V6 of the second actuator 582 from a first state N2 to a second state O2. The above-described change of the processor 360 may be performed by changing the second phase of the second signal F2 from the first state F2 to the second state E2. After the processor 360 changes one of the first vibration V5 of the first actuator 581 and the second vibration V6 of the second actuator 582 into the opposite phase, an amplitude (e.g., +D) of the first vibration V5 of the first actuator 581 and an amplitude (e.g., +D) of the second vibration V6 of the second actuator 582 may be formed in the same direction in the same time interval. As the first actuator 581 and the second actuator 582 vibrate in the same direction, the vibration transmitted to the housings 510, 520, and 530 may be amplified by constructive interference.

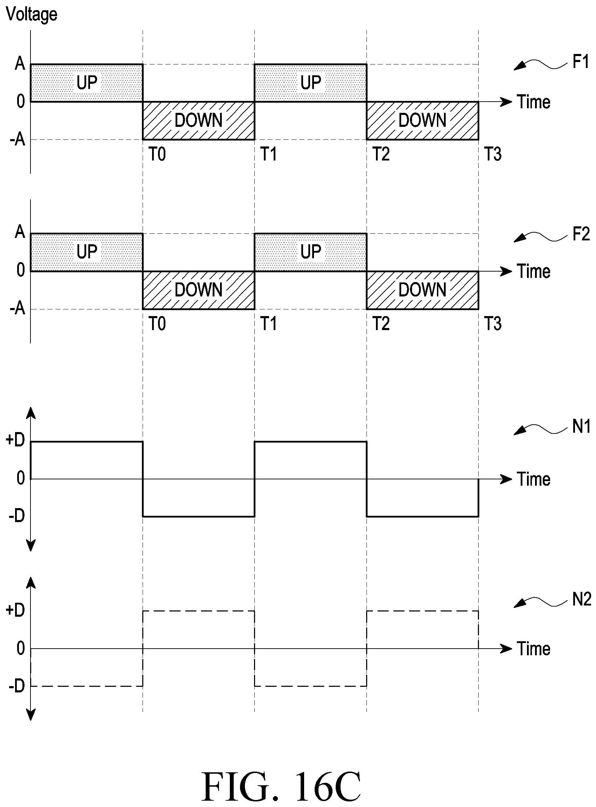

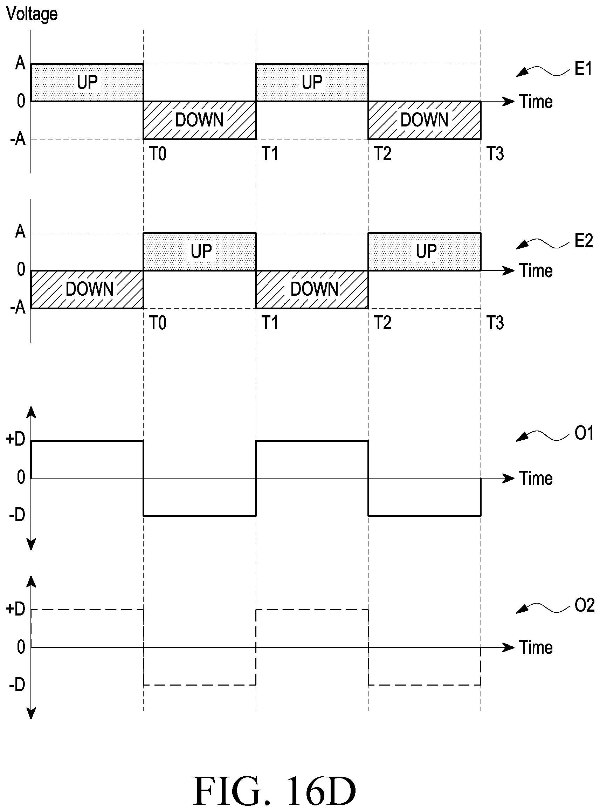

FIG. 16A is a view illustrating a seventh example S7 of a state in which the electronic device 101 is folded. FIG. 16B is a view illustrating an eighth example S8 of a state in which the electronic device 101 is folded. FIG. 16C is a graph illustrating vibrations N1 and N2 of an actuator 580 and phases F1 and F2 of signals transmitted to an actuator 680 before phase control (e.g., the operation (P500) of FIG. 9) is performed by the processor 360 in an eighth example S8 of a state in which the electronic device 101 is folded. FIG. 16D is a graph illustrating vibrations O1 and O2 of an actuator 680 and phases E1 and E2 of signals transmitted to the actuator 680 after phase control (e.g., the operation (P500) of FIG. 9) is performed by the processor 360 in an eighth example S8 of a state in which the electronic device 101 is folded. The components described with reference to FIGS. 16A to 16D may be partially or entirely the same as the components described with reference to FIGS. 1 to 15D. The components described with reference to FIGS. 16A to 16D may be partially or entirely the same as the components described with reference to FIGS. 17A to 17D.

According to an embodiment, a second housing 620 may be rotated with respect to a first housing 610. The first housing 610 and the second housing 620 may be connected through a first hinge 640. The second housing 620 may be rotated toward the first housing 610 in a first direction R1. A first angle A may be formed between the first housing 610 and the second housing 620. A first actuator 681 may be disposed in the second housing 620. A first vibration V7 of the first actuator 681 may have a magnitude and a direction. For example, the first vibration V7 of the first actuator 681 may have a vibration component in a second direction (e.g., -Z direction).

According to an embodiment, a third housing 630 may be rotated with respect to the first housing 610. The first housing 610 and the third housing 630 may be connected through a second hinge 650. The third housing 630 may be rotated toward the first housing 610 in a second direction R2. A second angle B may be formed between the first housing 610 and the third housing 630. A second actuator 682 may be disposed in the third housing 630. A second vibration V8 of the second actuator 682 may have a magnitude and a direction. For example, the second vibration V8 of the second actuator 682 may have a vibration component in a second direction (e.g., +Z direction).

According to an embodiment, the second housing 620 may be rotated toward the first housing 610 in the first direction R1, and the third housing 630 may be rotated toward the first housing 610 in the second direction R2. The second housing 620 and the third housing 630 may be rotated toward different surfaces of the first housing 610. For example, the third housing 630 may be rotated toward a display (e.g., the first display area 202a of FIG. 2) disposed in the first housing 610, and the second housing 620 may be rotated toward a surface opposite to the surface where the display 202a is located.

In an eighth example S8 state of the electronic device 101, a relative angle C may be formed between the first vibration V7 and the second vibration V8. The relative angle may be an included angle between the first vibration V7 and the second vibration V8. The relative angle may be determined by the method described with reference to FIGS. 7 to 10B. In the eighth example S8 state of the electronic device 101, the relative angle C may be smaller than a preconfigured reference value (e.g., 90 degrees). The processor 360 may change one of a first phase of a first signal F1 transmitted to the first actuator 681 and a second phase of a second signal F2 transmitted to the second actuator 682. For example, the processor 360 may maintain the first phase of the first signal F1 transmitted to the first actuator 681, and change the second phase of the second signal F2 transmitted to the second actuator 682 from a first state F2 to a second state E2. The second phase of the second signal in the first state F2 and the second phase of the second signal in the second state E2 may be opposite to each other.

In the eighth example S8 state of the electronic device 101, the processor 360 may change one of the first vibration V7 of the first actuator 681 and the second vibration V8 of the second actuator 682 into an opposite phase. For example, the processor 360 may maintain the first vibration V7 of the first actuator 681 in both a first state N1 and a second state O1 equally, and may change the second vibration V8 of the second actuator 682 from a first state N2 to a second state O2. The above-described change of the processor 360 may be performed by changing the second phase of the second signal F2 from the first state F2 to the second state E2. After the processor 360 changes one of the first vibration V7 of the first actuator 681 and the second vibration V8 of the second actuator 682 into the opposite phase, an amplitude (e.g., +D) of the first vibration V7 of the first actuator 681 and an amplitude (e.g., +D) of the second vibration V8 of the second actuator 682 may be formed in the same direction in the same time interval. As the first actuator 681 and the second actuator 682 vibrate in the same direction, the vibration transmitted to the housings 610, 620, and 630 may be amplified by constructive interference.

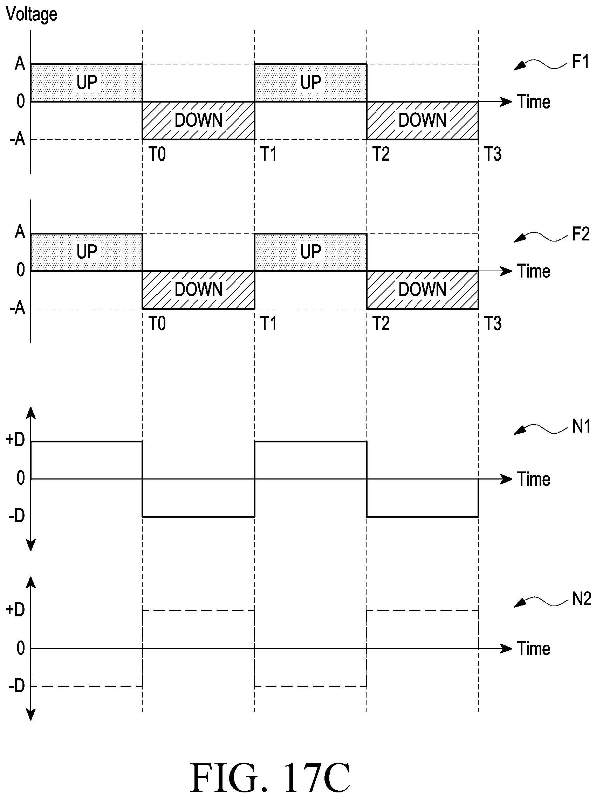

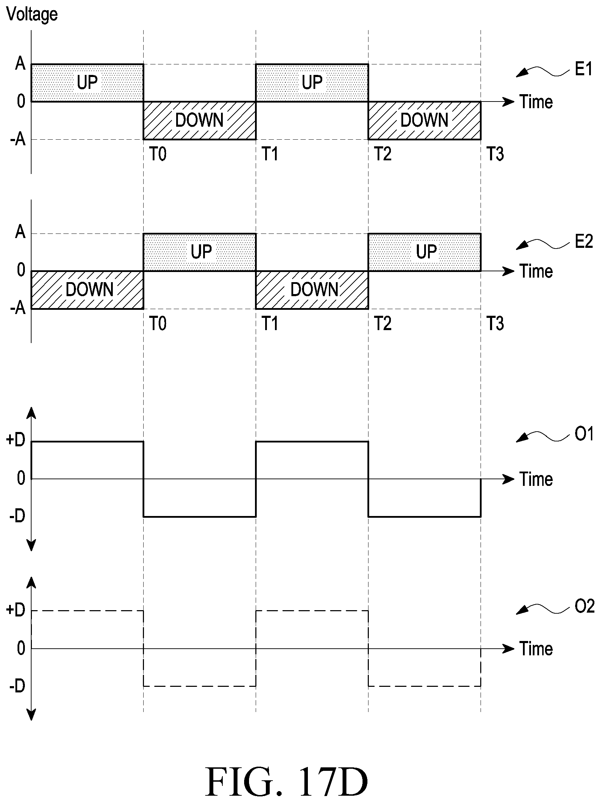

FIG. 17A is a view illustrating a ninth example S9 of a state in which the electronic device 101 is folded. FIG. 17B is a view illustrating a tenth example S10 of a state in which the electronic device 101 is folded. FIG. 17C is a graph illustrating vibrations N1 and N2 of an actuator 780 and phases F1 and F2 of signals transmitted to the actuator 780 before phase control (e.g., the operation (P500) of FIG. 9) is performed by the processor 360 in a tenth example S10 of a state in which the electronic device 101 is folded. FIG. 17D is a graph illustrating vibrations O1 and O2 of an actuator 780 and phases E1 and E2 of signals transmitted to the actuator 780 after phase control (e.g., the operation (P500) of FIG. 9) is performed by the processor 360 in a tenth example S10 of a state in which the electronic device 101 is folded. The components described with reference to FIGS. 17A to 17D may be partially or entirely the same as the components described with reference to FIGS. 1 to 16D.

According to an embodiment, a first housing 710 and a second housing 720 may be rotated with respect to each other. The first housing 710 and the second housing 720 may be connected through a hinge 730. The above description of the second housing 320 with reference to FIG. 7B may be equally applicable to the description of the first housing 710. The above description of the third housing 330 with reference to FIG. 7B may be equally applicable to the description of the second housing 720. The above description of the hinge 340 with reference to FIG. 7B may be equally applicable to the description of the hinge 730. A first angle A may be formed between the first housing 710 and the second housing 720. The first angle A may be the same as the relative angle C described with reference to FIGS. 7A and 7B. A first actuator 781 may be disposed in the first housing 710. The above description of the first actuator 381 with reference to FIG. 7B may be equally applicable to the description of the first actuator 781. A first vibration V9 of the first actuator 781 may have a magnitude and a direction. For example, the first vibration V9 of the first actuator 781 may have a vibration component in a first direction (e.g., -X direction). A second actuator 782 may be disposed in the second housing 720. The above description of the second actuator 782 with reference to FIG. 7B may be equally applicable to the description of the second actuator 782. A second vibration V10 of the second actuator 782 may have a magnitude and a direction. For example, the second vibration V10 of the second actuator 782 may have a vibration component in a first direction (e.g., -X direction).

In a tenth example S10 state of the electronic device 101, a relative angle C may be formed between the first vibration V9 and the second vibration V10. The relative angle may be an included angle between the first vibration V9 and the second vibration V10. The relative angle may be determined by the method described with reference to FIGS. 7A to 10B. In the tenth example S10 state of the electronic device 101, the relative angle C may be smaller than a preconfigured reference value (e.g., 90 degrees). The processor 360 may change one of a first phase of a first signal F1 transmitted to the first actuator 781 and a second phase of a second signal F2 transmitted to the second actuator 782. For example, the processor 360 may maintain the first phase of the first signal F1 transmitted to the first actuator 781, and change the second phase of the second signal F2 transmitted to the second actuator 782 from a first state F2 to a second state E2. The second phase of the second signal in the first state F2 and the second phase of the second signal in the second state E2 may be opposite to each other.

In the tenth example S10 state of the electronic device 101, the processor 360 may change one of the first vibration V9 of the first actuator 781 and the second vibration V10 of the second actuator 782 into an opposite phase. For example, the processor 360 may maintain the first vibration V9 of the first actuator 781 in both a first state N1 and a second state O1 equally, and may change the second vibration V10 of the second actuator 782 from a first state N2 to a second state O2. The above-described change of the processor 360 may be performed by changing the second phase of the second signal F2 from the first state F2 to the second state E2. After the processor 360 changes one of the first vibration V9 of the first actuator 781 and the second vibration V10 of the second actuator 782 into the opposite phase, an amplitude (e.g., +D) of the first vibration V9 of the first actuator 781 and an amplitude (e.g., +D) of the second vibration V10 of the second actuator 782 may be formed in the same direction in the same time interval. As the first actuator 781 and the second actuator 782 vibrate in the same direction, the vibration transmitted to the housings 710 and 720 may be amplified by constructive interference.

An electronic device includes a housing and a display. The electronic device may include a haptic module that allows a user to recognize, in a preconfigured operation situation, the operation situation. The haptic module delivers information to the user through a tactile, visual, or auditory sense. In the case of the haptic module that delivers the information to the user through vibrations, a plurality of vibration members may be arranged to be spaced apart from each other. If vibrations generated from the plurality of vibration members have the same phase depending on a use state of the electronic device, the degree of the vibrations transmitted to the user may be reduced.

The task to be achieved in the disclosure may be to reduce the loss of sensory information transmitted to the outside of the electronic device.

The task to be achieved in the disclosure may be to increase the intensity of vibration information generated by an actuator.

The tasks to be achieved in the disclosure are not limited to the above-mentioned tasks, and may be determined in various ways without departing from the spirit and scope of the disclosure.

An electronic device according to various embodiments of the disclosure changes phases of actuators which vibrate in opposite directions, and thus can reduce the offset of vibrations generated from the actuators.

An electronic device according to various embodiments of the disclosure can amplify vibrations generated from a plurality of actuators through constructive interference.

The effects obtainable from the disclosure are not limited to the above-mentioned effects, and other effects not mentioned may be clearly understood by a person skilled in the art to which the disclosure belongs from the following description.

An electronic device (e.g., 101 in FIGS. 1 to 17D) according to an embodiment of the disclosure may include a first housing (e.g., 310 in FIGS. 1 to 17D).

The electronic device (e.g., 101 in FIGS. 1 to 17D) according to an embodiment of the disclosure may include a second housing (e.g., 320 in FIGS. 1 to 17D) rotatably disposed with respect to the first housing (e.g., 310 in FIGS. 1 to 17D).

The electronic device (e.g., 101 in FIGS. 1 to 17D) according to an embodiment of the disclosure may include a third housing (e.g., 330 in FIGS. 1 to 17D) rotatably disposed with respect to the first housing (e.g., 310 in FIGS. 1 to 17D) and spaced apart from the second housing (e.g., 320 in FIGS. 1 to 17D).

The electronic device (e.g., 101 in FIGS. 1 to 17D) according to an embodiment of the disclosure may include a first hinge (e.g., 340 in FIGS. 1 to 17D) connecting the first housing (e.g., 310 in FIGS. 1 to 17D) and the second housing (e.g., 320 in FIGS. 1 to 17D).

The electronic device (e.g., 101 in FIGS. 1 to 17D) according to an embodiment of the disclosure may include a second hinge (e.g., 350 in FIGS. 1 to 17D) connecting the first housing (e.g., 310 in FIGS. 1 to 17D) and the third housing (e.g., 330 in FIGS. 1 to 17D).

The electronic device (e.g., 101 in FIGS. 1 to 17D) according to an embodiment of the disclosure may include a first actuator (e.g., 381 in FIGS. 1 to 17D) disposed in the second housing (e.g., 320 in FIGS. 1 to 17D) and configured to generate a first vibration (e.g., V1 in FIGS. 1 to 17D).

The electronic device (e.g., 101 in FIGS. 1 to 17D) according to an embodiment of the disclosure may include a second actuator (e.g., 382 in FIGS. 1 to 17D) disposed in the third housing (e.g., 330 in FIGS. 1 to 17D) and configured to generate a second vibration (e.g., V2 in FIGS. 1 to 17D) distinct from the first vibration (e.g., V1 in FIGS. 1 to 17D).

The electronic device (e.g., 101 in FIGS. 1 to 17D) according to an embodiment of the disclosure may include a sensor (e.g., 370 in FIGS. 1 to 17D) configured to sense a first angle (e.g., A in FIGS. 1 to 17D) of the second housing (e.g., 320 in FIGS. 1 to 17D) with respect to the first housing (e.g., 310 in FIGS. 1 to 17D), and a second angle (e.g., B in FIGS. 1 to 17D) of the third housing (e.g., 330 in FIGS. 1 to 17D) with respect to the first housing (e.g., 310 in FIGS. 1 to 17D).

The electronic device (e.g., 101 in FIGS. 1 to 17D) according to an embodiment of the disclosure may include a processor (e.g., 360 in FIGS. 1 to 17D) configured to adjust the first vibration (e.g., V1 in FIGS. 1 to 17D) or the second vibration (e.g., V2 in FIGS. 1 to 17D), based on sensing information of the sensor (e.g., 370 in FIGS. 1 to 17D).

The processor (e.g., 360 in FIGS. 1 to 17D) according to an embodiment of the disclosure may be configured to adjust the first vibration V1 or the second vibration (e.g., V2 in FIGS. 1 to 17D), based on a relative angle C determined by the first angle (e.g., A in FIGS. 1 to 17D) and the second angle (e.g., B in FIGS. 1 to 17D).

The processor (e.g., 360 in FIGS. 1 to 17D) according to an embodiment of the disclosure may be configured to, when the relative angle C is smaller than a preconfigured reference value, adjust the first vibration (e.g., V1 in FIGS. 1 to 17D) or the second vibration (e.g., V2 in FIGS. 1 to 17D).

The processor (e.g., 360 in FIGS. 1 to 17D) according to an embodiment of the disclosure may be configured to, when the relative angle C is a value within a preconfigured first range, adjust the first vibration (e.g., V1 in FIGS. 1 to 17D) or the second vibration (e.g., V2 in FIGS. 1 to 17D).

The processor (e.g., 360 in FIGS. 1 to 17D) according to an embodiment of the disclosure may be configured to generate a first signal transmitted to the first actuator (e.g., 381 in FIGS. 1 to 17D) and having a first phase, and a second signal transmitted to the second actuator (e.g., 382 in FIGS. 1 to 17D) and having a second phase.

The processor (e.g., 360 in FIGS. 1 to 17D) according to an embodiment of the disclosure may be configured to change the first phase and the second phase.

The processor (e.g., 360 in FIGS. 1 to 17D) according to an embodiment of the disclosure may be configured to change one of the first phase and the second phase into an opposite phase.

The processor (e.g., 360 in FIGS. 1 to 17D) according to an embodiment of the disclosure may be configured to change one of the first vibration (e.g., V1 in FIGS. 1 to 17D) and the second vibration (e.g., V2 in FIGS. 1 to 17D) into an opposite phase.

The processor (e.g., 360 in FIGS. 1 to 17D) according to an embodiment of the disclosure may be configured to adjust the first vibration (e.g., V1 in FIGS. 1 to 17D) or the second vibration (e.g., V2 in FIGS. 1 to 17D), based on a relative angle C formed by the first vibration (e.g., V1 in FIGS. 1 to 17D) and the second vibration (e.g., V2 in FIGS. 1 to 17D), each of which has a direction.

The processor (e.g., 360 in FIGS. 1 to 17D) according to an embodiment of the disclosure may be configured to adjust the first vibration (e.g., V1 in FIGS. 1 to 17D) or the second vibration (e.g., V2 in FIGS. 1 to 17D) when a vector component of the first vibration (e.g., V1 in FIGS. 1 to 17D) in a first direction and a vector component of the second vibration (e.g., V2 in FIGS. 1 to 17D) in the first direction are opposite to each other.

The sensor (e.g., 370 in FIGS. 1 to 17D) according to an embodiment of the disclosure may include a first sensor (e.g., 371 in FIGS. 1 to 17D) disposed in the first housing (e.g., 310 in FIGS. 1 to 17D).

The sensor (e.g., 370 in FIGS. 1 to 17D) according to an embodiment of the disclosure may include a second sensor (e.g., 372 in FIGS. 1 to 17D) disposed in the second housing (e.g., 320 in FIGS. 1 to 17D).

The sensor (e.g., 370 in FIGS. 1 to 17D) according to an embodiment of the disclosure may include a third sensor (e.g., 373 in FIGS. 1 to 17D) disposed in the third housing (e.g., 330 in FIGS. 1 to 17D).

The electronic device (e.g., 101 in FIGS. 1 to 17D) according to an embodiment of the disclosure may include a flexible display (e.g., 202 in FIGS. 1 to 17D) which is at least partially disposed in the first housing (e.g., 310 in FIGS. 1 to 17D).

The first angle (e.g., A in FIGS. 1 to 17D) and the second angle (e.g., B in FIGS. 1 to 17D) according to an embodiment of the disclosure may be formed with respect to a surface of the flexible display (e.g., 202 in FIGS. 1 to 17D).

The electronic device (e.g., 101 in FIGS. 1 to 17D) according to an embodiment of the disclosure may include a flexible display (e.g., 202 in FIGS. 1 to 17D) stably placed on the first, second, and third housings (e.g., 310, 320, and 330 in FIGS. 1 to 17D) and configured to be at least partially deformable.

The electronic device (e.g., 101 in FIGS. 1 to 17D) according to an embodiment of the disclosure may include a second display (e.g., 390 in FIGS. 1 to 17D) movably disposed together with the second housing (e.g., 320 in FIGS. 1 to 17D) and visually exposed to the outside of the electronic device (e.g., 101 in FIGS. 1 to 17D) when the processor (e.g., 360 in FIGS. 1 to 17D) adjusts the first vibration (e.g., V1 in FIGS. 1 to 17D) or the second vibration (e.g., V2 in FIGS. 1 to 17D).

The first actuator (e.g., 381 in FIGS. 1 to 17D) and the second actuator (e.g., 382 in FIGS. 1 to 17D) according to an embodiment of the disclosure may be configured to vibrate in the same direction.

The first actuator (e.g., 581 in FIGS. 1 to 17D) and the second actuator (e.g., 582 in FIGS. 1 to 17D) according to an embodiment of the disclosure may be configured to vibrate in directions orthogonal to each other.

The second housing (e.g., 320 in FIGS. 1 to 17D) and the third housing (e.g., 330 in FIGS. 1 to 17D) according to an embodiment of the disclosure may be configured to rotate toward different surfaces of the first housing (e.g., 310 in FIGS. 1 to 17D).

A control method of an electronic device according to an embodiment of the disclosure may include a first operation (e.g., P100 in FIGS. 1 to 17D) of determining a first angle (e.g., A in FIGS. 1 to 17D) between a first housing (e.g., 310 in FIGS. 1 to 17D) and a second housing (e.g., 320 in FIGS. 1 to 17D) rotatably disposed with respect to the first housing (e.g., 310 in FIGS. 1 to 17D).

The control method of the electronic device according to an embodiment of the disclosure may include a second operation (e.g., P200 in FIGS. 1 to 17D) of determining a second angle (e.g., B in FIGS. 1 to 17D) between the first housing (e.g., 310 in FIGS. 1 to 17D) and a third housing (e.g., 330 in FIGS. 1 to 17D) rotatably disposed with respect to the first housing (e.g., 310 in FIGS. 1 to 17D).

The control method of the electronic device according to an embodiment of the disclosure may include a third operation (e.g., P500 in FIGS. 1 to 17D) of adjusting one of a first vibration (e.g., V1 in FIGS. 1 to 17D) generated from a first actuator (e.g., 381 in FIGS. 1 to 17D) disposed in the second housing (e.g., 320 in FIGS. 1 to 17D) and a second vibration (e.g., V2 in FIGS. 1 to 17D) generated from a second actuator (e.g., 382 in FIGS. 1 to 17D) disposed in the third housing (e.g., 330 in FIGS. 1 to 17D), based on the first angle (e.g., A in FIGS. 1 to 17D) and the second angle (e.g., B in FIGS. 1 to 17D).

The third operation according to an embodiment of the disclosure may include an operation of determining a relative angle C between the second housing (e.g., 320 in FIGS. 1 to 17D) and the third housing (e.g., 330 in FIGS. 1 to 17D), based on the first angle (e.g., A in FIGS. 1 to 17D) and the second angle (e.g., B in FIGS. 1 to 17D).

The third operation according to an embodiment of the disclosure may include an operation of, when the relative angle C is smaller than a preconfigured reference value, adjusting one of the first vibration (e.g., V1 in FIGS. 1 to 17D) and the second vibration (e.g., V2 in FIGS. 1 to 17D).

The third operation according to an embodiment of the disclosure may include an operation of changing a phase of one of a first signal transmitted to the first actuator (e.g., 381 in FIGS. 1 to 17D) and having a first phase and a second signal transmitted to the second actuator (e.g., 382 in FIGS. 1 to 17D) and having a second phase.

The third operation according to an embodiment of the disclosure may include an operation of changing one of the first vibration (e.g., V1 in FIGS. 1 to 17D) and the second vibration (e.g., V2 in FIGS. 1 to 17D) into an opposite phase.

A foldable electronic device (101) according to an embodiment of the present disclosure comprises: a first housing (310); a second housing (320) disposed rotatably with respect to the first housing (310); a third housing (330) disposed rotatably with respect to the first housing (310) and spaced apart from the second housing (320); a first hinge (340) connecting the first housing (310) and the second housing (320); a second hinge (350) connecting the first housing (310) and the third housing (330); a first actuator (381) disposed in the second housing (320) and configured to generate a first vibration (V1); a second actuator (382) disposed in the third housing (330) and configured to generate a second vibration (V2); and a processor (360) configured to: determine a relative angle (C) between the second housing (320) and the third housing (330) based on a first angle (A) between the first housing (310) and the second housing (320), and a second angle (B) between the first housing (310) and the third housing (330), obtained using a plurality of sensors (370); and adjust at least one of the first vibration (V1) or the second vibration (V2) through at least one of the first actuator (381) or the second actuator (381) based on the relative angle (C).

According to one or more embodiments of the present disclosure, the processor (360) is configured to control a signal which is transmitted to one of the first actuator (381) or the second actuator (382) based on the relative angle (C).

According to one or more embodiments of the present disclosure, the relative angle (C) corresponds to an absolute value of difference between a sum of the first angle (A) and the second angle (B) and 180 degree.

According to one or more embodiments of the present disclosure, the processor (360) is configured to control a signal transmitted to the first actuator (381) or a signal transmitted to the second actuator (382) when the relative angle (C) is ranged in a predetermined first range.

According to one or more embodiments of the present disclosure, the processor (360) is configured to transmit a first signal to the first actuator (381) and a second signal to the second actuator (382), and/or the processor (360) is configured to change one of a phase of the first signal or a phase of the second signal based on the relative angle (C).

According to one or more embodiments of the present disclosure, the processor (360) is configured to change one of the phase of the first signal or the phase of the second signal to an opposite phase.

According to one or more embodiments of the present disclosure, the processor (360) is configured to control the phase of the first signal and the phase of the second signal to be reversed phase to each other while the relative angle (C) is greater than 0 degree and smaller than 90 degree, and to control the phase of the first signal and the phase of the second signal to be same each other while the relative angle (C) is greater than 90 degree and smaller than 180 degree.

According to one or more embodiments of the present disclosure, a direction of the first vibration (V1) is parallel with respect to the second housing (320), and a direction of the second vibration (V2) is parallel with respect to the third housing (330).

According to one or more embodiments of the present disclosure, the processor (360) is configured to control the first vibration (V1) or the second vibration (V2) when a first vector component in a first direction of the first vibration (V1) and a second vector component in the first direction are opposite to each other.

According to one or more embodiments of the present disclosure, the sensor (370) includes: a first sensor (371) disposed in the first housing (310); a second sensor (372) disposed in the second housing (320); and a third sensor (373) disposed in the third housing (330).

An electronic device (101) according to an embodiment of the present disclosure comprises: a foldable housing (301, 701) including a first housing(320, 710) and a second housing (330, 720); a first actuator (381, 781) disposed in the first housing (320, 710) and configured to generate a first vibration (V1, V9); a second actuator (382, 782) disposed in the second housing (330, 720) and configured to generate a second vibration (V2, V10); and a processor (360) configured to: adjust at least one of the first vibration (V1, V9) or the second vibration (V2, V10) respectively through at least one of the first actuator (381, 781) or the second actuator (382, 782) based on a relative angle (C) between the first housing (320, 710) and the second housing (330, 730); and provide a first signal to the first actuator (381, 781) and a second signal to the second actuator (382, 782), wherein while the relative angle (C) is greater than 0 degree and less than 90 degree, a phase of the second signal is substantially reversed with respect to a phase of the first signal and while the relative angle (C) is greater than 90 degree and less than 180 degree, a phase of the second signal corresponds to a phase of the first signal.

According to one or more embodiments of the present disclosure, the relative angle (C) is an included angle between the first housing (320, 710) and the second housing (330, 720).

According to one or more embodiments of the present disclosure, the processor (360) is configured to control the first vibration (V1, V9) or the second vibration (V2, V10) based on a relative angle (C) identified by using the first vibration (V1, V9) in a first direction and the second vibration (V2, V10) in a second direction.

According to one or more embodiments of the present disclosure, the relative angle (C) is determined based on information obtained using a plurality of sensors (370) disposed in the foldable housing (301, 701).

According to one or more embodiments of the present disclosure, the processor (360) is configured to convert one of a phase of the first signal or a phase of the second signal.

A control method of an electronic device according to an embodiment of the present disclosure comprises: a first operation (P100) of determining a first angle (A) between a first housing (310) and a second housing (320) rotatably disposed with respect to the first housing (310); a second operation (P200) of determining a second angle (B) between the first housing (310) and a third housing (330) rotatably disposed with respect to the first housing (310); and a third operation (P500) of adjusting one of a first vibration (V1) generated from a first actuator (381) disposed in the second housing (320) and a second vibration (V2) generated from a second actuator (382) disposed in the third housing (330), based on the first angle (A) and the second angle (B).

According to one or more embodiments of the present disclosure, the control method further comprises an operation of determining a relative angle (C) between the second housing (320) and the third housing (330), based on the first angle (A) and the second angle (B).

According to one or more embodiments of the present disclosure, the third operation comprises an operation of, in case that the relative angle (C) is smaller than a preconfigured reference value, adjusting one of the first vibration (V1) and the second vibration (V2).

According to one or more embodiments of the present disclosure, the third operation comprises an operation of changing a phase of one of a first signal transmitted to the first actuator (381) and having a first phase and a second signal transmitted to the second actuator (382) and having a second phase.

According to one or more embodiments of the present disclosure, the third operation comprises an operation of changing one of the first vibration (V1) and the second vibration (V2) into an opposite phase.

Although specific embodiments have been described above in the detailed description of the disclosure, it will be apparent to those skilled in the art that various modifications and changes may be made thereto without departing from the scope of the disclosure.

Although an embodiment of the disclosure has been illustrated and described, it should be appreciated that the embodiment does not limit the disclosure, but is provided for the sake of illustration. It will be apparent to those skilled in the art that various changes may be made to the form and details of the disclosure without departing from the overall perspective of the disclosure including the appended claims and equivalents thereof.

**Claims**

1. A foldable electronic device (101) comprising:

   a first housing (310);
   a second housing (320) disposed rotatably with respect to the first housing (310);
   a third housing (330) disposed rotatably with respect to the first housing (310) and spaced apart from the second housing (320);
   a first hinge (340) connecting the first housing (310) and the second housing (320);
   a second hinge (350) connecting the first housing (310) and the third housing (330);
   a first actuator (381) disposed in the second housing (320) and configured to generate a first vibration (V1);
   a second actuator (382) disposed in the third housing (330) and configured to generate a second vibration (V2); and
   a processor (360) configured to:

      determine a relative angle (C) between the second housing (320) and the third housing (330) based on a first angle (A) between the first housing (310) and the second housing (320), and a second angle (B) between the first housing (310) and the third housing (330), obtained using a plurality of sensors (370); and
      adjust at least one of the first vibration (V1) or the second vibration (V2) through at least one of the first actuator (381) or the second actuator (381) based on the relative angle (C).

2. The foldable electronic device (101) of claim 1,
   wherein the processor (360) is configured to control a signal which is transmitted to one of the first actuator (381) or the second actuator (382) based on the relative angle (C).

3. The foldable electronic device (101) of claim 1 or 2,
   wherein the relative angle (C) corresponds to an absolute value of difference between a sum of the first angle (A) and the second angle (B) and 180 degree.

4. The foldable electronic device (101) of any one of claims 1 to 3,
   wherein the processor (360) is configured to control a signal transmitted to the first actuator (381) or a signal transmitted to the second actuator (382) when the relative angle (C) is ranged in a predetermined first range.

5. The foldable electronic device (101) of any one of claims 1 to 4,

wherein the processor (360) is configured to transmit a first signal to the first actuator (381) and a second signal to the second actuator (382),
wherein the processor (360) is configured to change one of a phase of the first signal or a phase of the second signal based on the relative angle (C).

6. The foldable electronic device (101) of claim 5,
wherein the processor (360) is configured to change one of the phase of the first signal or the phase of the second signal to an opposite phase.

7. The foldable electronic device (101) of claim 5 or 6,
wherein the processor (360) is configured to control the phase of the first signal and the phase of the second signal to be reversed phase to each other while the relative angle (C) is greater than 0 degree and smaller than 90 degree, and to control the phase of the first signal and the phase of the second signal to be same each other while the relative angle (C) is greater than 90 degree and smaller than 180 degree.

8. The foldable electronic device (101) of any one of claims 1 to 7,

wherein a direction of the first vibration (V1) is parallel with respect to the second housing (320), and a direction of the second vibration (V2) is parallel with respect to the third housing (330), and/or
wherein the processor (360) is configured to control the first vibration (V1) or the second vibration (V2) when a first vector component in a first direction of the first vibration (V1) and a second vector component in the first direction are opposite to each other.

9. The foldable electronic device (101) of any one of claims 1 to 8,
wherein the sensor (370) includes:

a first sensor (371) disposed in the first housing (310);
a second sensor (372) disposed in the second housing (320); and
a third sensor (373) disposed in the third housing (330).

10. An electronic device (101) comprising:

a foldable housing (301, 701) including a first housing (320, 710) and a second housing (330, 720);
a first actuator (381, 781) disposed in the first housing (320, 710) and configured to generate a first vibration (V1, V9);
a second actuator (382, 782) disposed in the second housing (330, 720) and configured to generate a second vibration (V2, V10); and
a processor (360) configured to:

adjust at least one of the first vibration (V1, V9) or the second vibration (V2, V10) respectively through at least one of the first actuator (381, 781) or the second actuator (382, 782) based on a relative angle (C) between the first housing (320, 710) and the second housing (330, 730); and
provide a first signal to the first actuator (381, 781) and a second signal to the second actuator (382, 782), wherein while the relative angle (C) is greater than 0 degree and less than 90 degree, a phase of the second signal is substantially reversed with respect to a phase of the first signal and while the relative angle (C) is greater than 90 degree and less than 180 degree, a phase of the second signal corresponds to a phase of the first signal.

11. The electronic device (101) of claim 10,

wherein the relative angle (C) is an included angle between the first housing (320, 710) and the second housing (330, 720), and/or
wherein the processor (360) is configured to control the first vibration (V1, V9) or the second vibration (V2, V10) based on a relative angle (C) identified by using the first vibration (V1, V9) in a first direction and the second vibration (V2, V10) in a second direction, and/or
wherein the processor (360) is configured to convert one of a phase of the first signal or a phase of the second signal.

**12.** The electronic device (101) of claim 10 or 11,
wherein the relative angle (C) is determined based on information obtained using a plurality of sensors (370) disposed in the foldable housing (301, 701).

**13.** A control method of an electronic device (101), the method comprising:

a first operation (P100) of determining a first angle (A) between a first housing (310) and a second housing (320) rotatably disposed with respect to the first housing (310);
a second operation (P200) of determining a second angle (B) between the first housing (310) and a third housing (330) rotatably disposed with respect to the first housing (310); and
a third operation (P500) of adjusting one of a first vibration (V1) generated from a first actuator (381) disposed in the second housing (320) and a second vibration (V2) generated from a second actuator (382) disposed in the third housing (330), based on the first angle (A) and the second angle (B).

**14.** The control method of claim 13, further comprising an operation of determining a relative angle (C) between the second housing (320) and the third housing (330), based on the first angle (A) and the second angle (B).

**15.** The control method of claim 14, wherein the third operation comprises an operation of, in case that the relative angle (C) is smaller than a preconfigured reference value, adjusting one of the first vibration (V1) and the second vibration (V2), and/or

wherein the third operation comprises an operation of changing a phase of one of a first signal transmitted to the first actuator (381) and having a first phase and a second signal transmitted to the second actuator (382) and having a second phase, and/or
wherein the third operation comprises an operation of changing one of the first vibration (V1) and the second vibration (V2) into an opposite phase.

EP 4 579 389 A1

**ELECTRONIC DEVICE 101**

- 150 INPUT MODULE
- 155 SOUND OUTPUT MODULE
- 160 DISPLAY MODULE
- 130 MEMORY
  - 132 VOLATILE MEMORY
  - 134 NON-VOLATILE MEMORY
    - 136 INTERNAL MEMORY
    - 138 EXTERNAL MEMORY
- 189 BATTERY
- 188 POWER MANAGEMENT MODULE
- 120 PROCESSOR
  - 121 MAIN PROCESSOR
  - 123 AUXILIARY PROCESSOR
- 190 COMMUNICATION MODULE
  - 192 WIRELESS COMMUNICATION MODULE
  - 194 WIRED COMMUNICATION MODULE
- 196 SUBSCRIBER IDENTIFICATION MODULE
- 197 ANTENNA MODULE
- 170 AUDIO MODULE
- 176 SENSOR MODULE
- 177 INTERFACE
- 178 CONNECTING TERMINAL
- 179 HAPTIC MODULE
- 180 CAMERA MODULE

100

140 **PROGRAM**
- 146 APPLICATION
- 144 MIDDLEWARE
- 142 OPERATING SYSTEM

199 SECOND NETWORK
198 FIRST NETWORK

104 ELECTRONIC DEVICE
102 ELECTRONIC DEVICE
108 SERVER

**FIG. 1**

FIG. 2

FIG. 3

FIG. 4

FIG. 5

FIG. 6

FIG. 7A

FIG. 7B

371
FIRST
SENSOR

372
SECOND
SENSOR

373
THIRD
SENSOR

PROCESSOR — 360

381
FIRST
ACTUATOR

382
SECOND
ACTUATOR

# FIG. 8

START

DETERMINE FIRST ANGLE — P100

DETERMINE SECOND ANGLE — P200

DETERMINE RELATIVE ANGLE — P300

COMPARE RELATIVE ANGLE — P400

CONTROL PHASE — P500

DRIVE ACTUATOR — P600

END

# FIG. 9

# FIG. 10A

# FIG. 10B

FIG. 11

FIG. 12A

FIG. 12B

FIG. 12C

FIG. 13A

FIG. 13B

FIG. 13C

FIG. 13D

FIG. 13E

FIG. 14A

FIG. 14B

FIG. 14C

FIG. 14D

FIG. 15A

FIG. 15B

FIG. 15C

FIG. 15D

FIG. 16A

FIG. 16B

FIG. 16C

FIG. 16D

FIG. 17A

FIG. 17B

FIG. 17C

FIG. 17D

## INTERNATIONAL SEARCH REPORT

| International application No. |
|---|
| **PCT/KR2024/096434** |

**A. CLASSIFICATION OF SUBJECT MATTER**

**G06F 1/16**(2006.01)i; **B06B 1/04**(2006.01)i; **G06F 3/01**(2006.01)i

According to International Patent Classification (IPC) or to both national classification and IPC

**B. FIELDS SEARCHED**

Minimum documentation searched (classification system followed by classification symbols)

G06F 1/16(2006.01); G06F 3/01(2006.01); G06F 3/0346(2013.01); G06F 3/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전자 장치(electronic device), 폴더블(foldable), 회전(rotation), 액츄에이터(actuator), 진동(vibration), 센서(sensor), 각도(angle), 조절(adjust)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0109737 A (SAMSUNG ELECTRONICS CO., LTD.) 23 September 2020 (2020-09-23) See paragraphs [0095], [0106]-[0107], [0116], [0139], [0147], [0165] and [0180]; and figures 7-8. | 10-12 |
| A | | 1-9,13-15 |
| A | KR 10-2021-0064616 A (SAMSUNG ELECTRONICS CO., LTD.) 03 June 2021 (2021-06-03) See paragraphs [0037], [0050] and [0063]; and figures 2a-2b. | 1-15 |
| A | US 2021-0311696 A1 (VIVO MOBILE COMMUNICATION CO., LTD.) 07 October 2021 (2021-10-07) See paragraphs [0024]-[0237]; and figures 1-5. | 1-15 |
| A | KR 10-2372577 B1 (BEIJING XIAOMI MOBILE SOFTWARE CO., LTD.) 10 March 2022 (2022-03-10) See paragraphs [0035]-[0272]; and figures 1-16. | 1-15 |
| A | KR 10-2562126 B1 (SAMSUNG ELECTRONICS CO., LTD.) 02 August 2023 (2023-08-02) See paragraphs [0014]-[0121]; and figures 1-9. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 February 2025** | **13 February 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/096434**

| Patent document cited in search report | | | Publication date (day/month/year) | Patent family member(s) | | | Publication date (day/month/year) |
|---|---|---|---|---|---|---|---|
| KR | 10-2020-0109737 | A | 23 September 2020 | CN | 113518964 | A | 19 October 2021 |
| | | | | CN | 113518964 | B | 14 May 2024 |
| | | | | EP | 3891586 | A1 | 13 October 2021 |
| | | | | US | 11513566 | B2 | 29 November 2022 |
| | | | | US | 11907024 | B2 | 20 February 2024 |
| | | | | US | 2020-0293093 | A1 | 17 September 2020 |
| | | | | US | 2023-0048158 | A1 | 16 February 2023 |
| | | | | WO | 2020-184872 | A1 | 17 September 2020 |
| KR | 10-2021-0064616 | A | 03 June 2021 | US | 2022-0286541 | A1 | 08 September 2022 |
| | | | | WO | 2021-107511 | A1 | 03 June 2021 |
| US | 2021-0311696 | A1 | 07 October 2021 | CN | 109739465 | A | 10 May 2019 |
| | | | | CN | 109739465 | B | 29 January 2021 |
| | | | | EP | 3901759 | A1 | 27 October 2021 |
| | | | | US | 11977814 | B2 | 07 May 2024 |
| | | | | US | 2024-0201943 | A1 | 20 June 2024 |
| | | | | WO | 2020-125274 | A1 | 25 June 2020 |
| KR | 10-2372577 | B1 | 10 March 2022 | CN | 112925407 | A | 08 June 2021 |
| | | | | EP | 3832991 | A1 | 09 June 2021 |
| | | | | EP | 3832991 | B1 | 03 August 2022 |
| | | | | JP | 2021-093114 | A | 17 June 2021 |
| | | | | JP | 6990743 | B2 | 12 January 2022 |
| | | | | US | 11165898 | B2 | 02 November 2021 |
| | | | | US | 2021-0176352 | A1 | 10 June 2021 |
| KR | 10-2562126 | B1 | 02 August 2023 | US | 11221676 | B2 | 11 January 2022 |
| | | | | US | 2020-0218353 | A1 | 09 July 2020 |
| | | | | WO | 2020-141793 | A1 | 09 July 2020 |

Form PCT/ISA/210 (patent family annex) (July 2022)